(19) Europäisches Patentamt
European Patent Office
Office européen des brevets

(11) **EP 4 342 126 B1**

(12) **EUROPEAN PATENT SPECIFICATION**

(45) Date of publication and mention
of the grant of the patent:
**31.12.2025 Bulletin 2026/01**

(21) Application number: **22725927.2**

(22) Date of filing: **19.05.2022**

(51) International Patent Classification (IPC):
*H04L 9/30* (2006.01)      *G06F 7/72* (2006.01)
*H04L 9/08* (2006.01)

(52) Cooperative Patent Classification (CPC):
**H04L 9/3066; H04L 9/0841**

(86) International application number:
**PCT/GB2022/051266**

(87) International publication number:
**WO 2022/243689 (24.11.2022 Gazette 2022/47)**

(54) **A SYSTEM AND A METHOD FOR PERFORMING OPERATIONS**

SYSTEM UND VERFAHREN ZUR DURCHFÜHRUNG VON OPERATIONEN

SYSTÈME ET PROCÉDÉ PERMETTANT D'EFFECTUER DES OPÉRATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2021 EP 21275060**

(43) Date of publication of application:
**27.03.2024 Bulletin 2024/13**

(73) Proprietor: **nCipher Security Limited**
**Cambridge**
**CB1 2GA (GB)**

(72) Inventors:
• **HARVEY, Ian Nigel**
**Cambridge CB1 2GA (GB)**
• **SOMEREN, Laurence Van**
**Cambridge CB1 2GA (GB)**

(74) Representative: **Marks & Clerk LLP**
**15 Fetter Lane**
**London EC4A 1BW (GB)**

(56) References cited:
**EP-A1- 2 085 878      WO-A1-2018/145191**

## Description

<u>Field</u>

The present invention relates to a system and a method for performing operations. The operations may be cryptographic operations. The system may comprise a hardware security module device for example.

<u>Background</u>

Elliptic Curve Cryptography (ECC) describes a cryptographic technique in which elliptic curves are used for key agreement schemes, key generation, digital signatures, pseudo-random generators or other cryptographic algorithms. Various types of elliptic curve can be used in such algorithms. For example, many standards for ECC use elliptic curves defined using the Weierstrass equation.

Cryptographic algorithms using elliptic curves may be implemented in a system having a hardware coprocessor, which is used to efficiently perform the elliptic curve calculations. For example, hardware coprocessors comprising fixed circuitry configured to perform elliptic curve calculations on elliptic curves defined using the Weierstrass equation are available.

However, various cryptographic standards use other types of elliptic curve, for example elliptic curves defined using the Montgomery equation or the Edwards equation. In some cases, a user may wish to implement a cryptographic algorithm in a system in which the hardware coprocessor does not support the type of elliptic curve used in the algorithm. In such cases, the elliptic curve calculations are implemented in software and executed using the system general processor. This can result in reduced speed of performance for such cryptographic algorithms. Further prior art solutions are disclosed in documents EP 2 085 878 A1 and WO 2018/145191 A1.

<u>Brief Description of the Figures</u>

Devices and methods in accordance with non-limiting embodiments will now be described with reference to the accompanying figures in which:

Figure 1 is a schematic illustration of a hardware security module device;

Figure 2 is a schematic illustration of a hardware security module device which is a system according to an embodiment;

Figure 3 is a flow chart showing a method according to an embodiment;

Figure 4 is a flow chart showing a method according to an embodiment;

Figure 5 is a schematic illustration of a hardware security module implementing a Diffie-Hellman key exchange scheme using a method according to an embodiment;

Figure 6 is a flow chart of a method of generating a public key according to an embodiment;

Figure 7 is a flow chart of a method according to an embodiment;

Figure 8 is a flow chart of a method according to an embodiment;

Figure 9 is a flow chart of a method according to an embodiment;

Figure 10 is a flow chart of a method according to an embodiment;

Figure 11(a) is a schematic illustration of a system according to an embodiment;

Figure 11(b) is a schematic illustration of an example smartcard device which may be included in the system of Figure 11(a);

Figure 12 is a schematic illustration of a method which is implemented on the system of

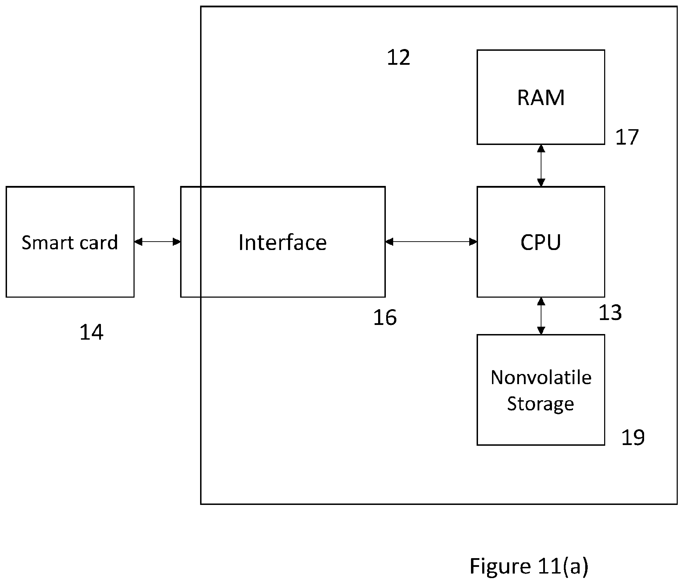

Figure 11(a) in accordance with an embodiment;

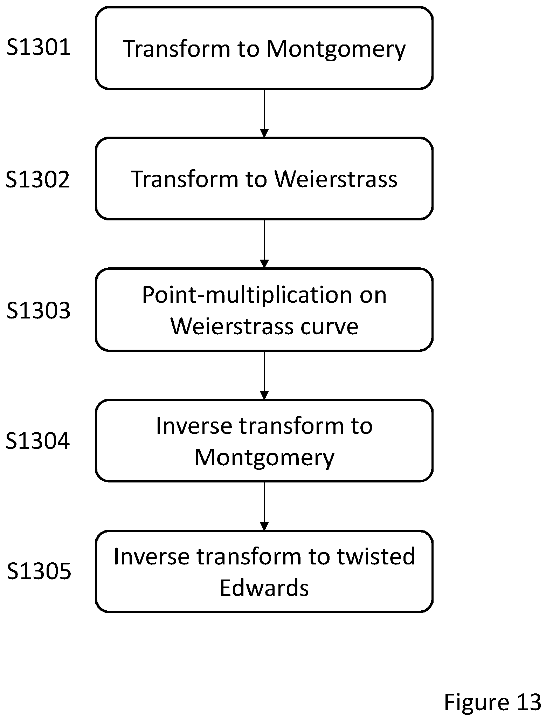

Figure 13 is a flow chart of a method according to an embodiment;

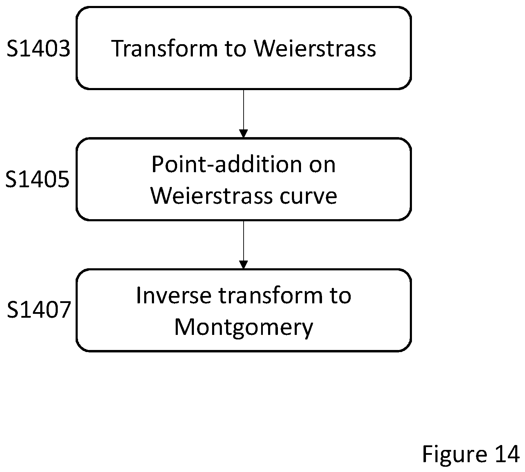

Figure 14 is a flow chart of a method according to an embodiment;

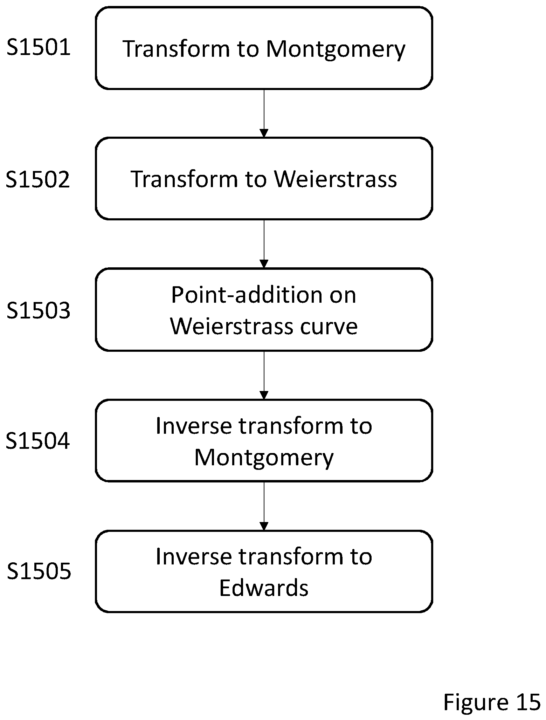

Figure 15 is a flow chart of a method according to an embodiment;

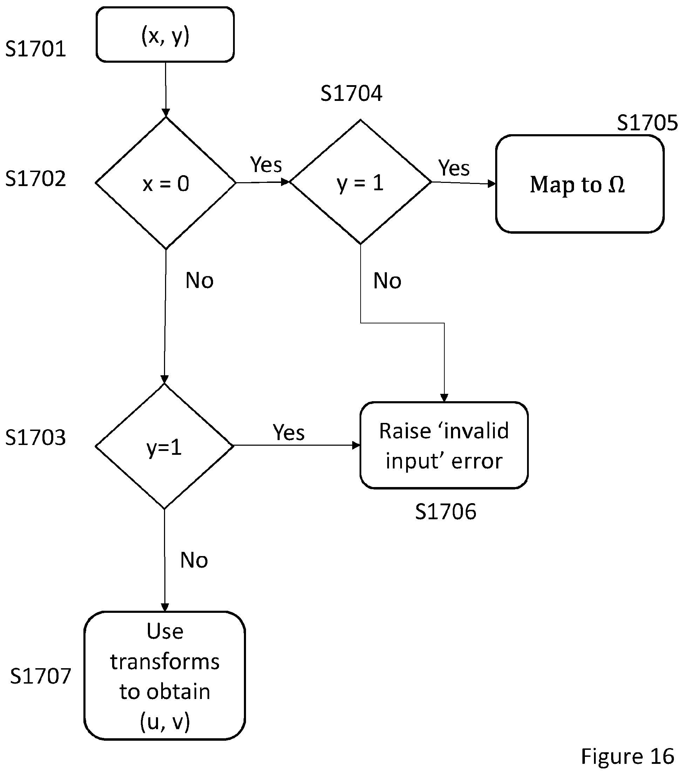

Figure 16 is a flow chart of a method used in the method of Figure 15 according to an embodiment; and

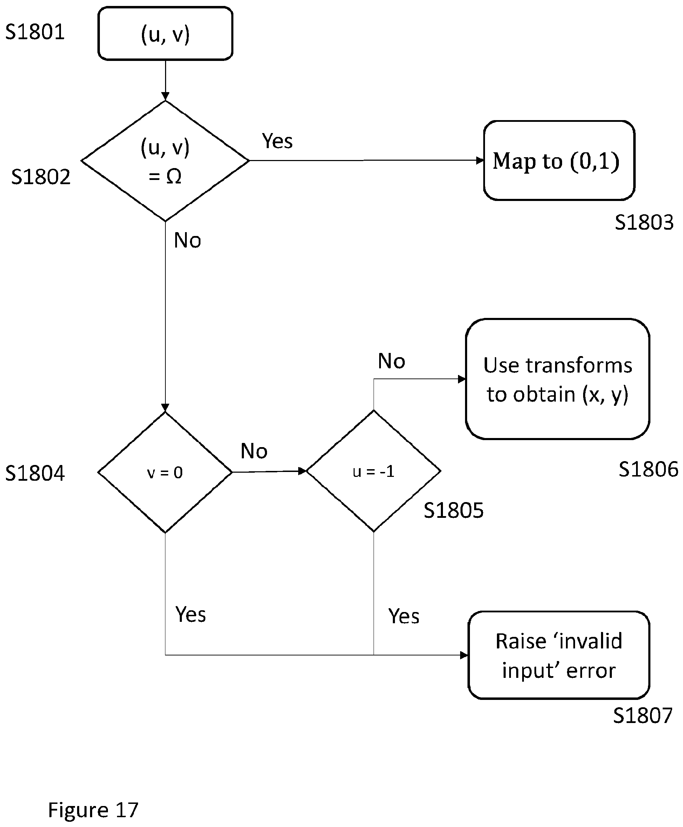

Figure 17 is a flow chart of a method used in the method of Figure 16 according to an embodiment.

Detailed Description

The objects of the present invention are achieved by means of the appended set of claims.

According to a first aspect, there is provided computer implemented method of performing an operation, the method comprising:

for a first value corresponding to a first point on a first elliptic curve of a first type defined on a finite field, obtaining a second value corresponding to a second point on a second elliptic curve of a second type defined on the finite field; performing a first operation using the second value to determine a third value corresponding to a third point on the second elliptic curve, wherein the first operation is performed on a first processor module which supports the first operation on an elliptic curve of the second type; and transforming the third value to a fourth value corresponding to a fourth point on the first elliptic curve.

In an embodiment, the operation is a cryptographic operation.

In an embodiment, the first operation is a point multiplication operation, a point addition operation, a point doubling operation or a combination of one or more of these operations.

In an embodiment, the first processor module does not support the first operation on an elliptic curve of the first type.

In an embodiment, the first type is an elliptic curve defined using parameters of a Montgomery equation or an Edwards equation, and the second type is an elliptic curve defined using parameters of a Weierstrass equation.

In an embodiment, obtaining the second value comprises transforming the first value to the second value. Transforming the first value to the second value may comprise retrieving one or more constants defining the second elliptic curve. The method may further comprise determining a further first value from the first value, the further first value corresponding to the first point, and transforming the further first value to a further second value corresponding to the second point, wherein the first operation is performed using the second value and the further second value.

In an embodiment, obtaining the second value comprises:

determining whether the first point corresponds to a pre-defined point; responsive to determining that the first point corresponds to the pre-defined point, retrieving the second value.

In an embodiment, transforming the third value to the fourth value is performed at least in part on a second processor module.

In an embodiment, the fourth point on the first elliptic curve is equivalent to a point obtained by performing the first operation on the first point on the first elliptic curve.

In an embodiment, the first type is an elliptic curve defined using parameters of a twisted Edwards equation.

In an embodiment, the first operation on an elliptic curve of the second type is implemented directly in hardware in the first processor module. In an embodiment, the first operation on an elliptic curve of the first type is not implemented directly in hardware in the first processor module.

In an embodiment, the first processor module comprises an application specific integrated circuit (ASIC) or a Field Programmable Gate Array (FPGA) configured to perform the first operation on an elliptic curve of the second type.

In an embodiment, obtaining the second value comprises determining whether the first point corresponds to an identity element of the first elliptic curve, and, if the first point corresponds to the identity element of the first elliptic curve, setting the second value as corresponding to the identity element of the second elliptic curve. In an embodiment, transforming the third value to the fourth value comprises determining whether the third point corresponds to the identity element of the second elliptic curve, and, if the third point corresponds to the identity element of the second elliptic curve, setting the fourth value as corresponding to the identity element of the first elliptic curve.

According to another aspect, there is provided a system comprising:
a first processor module which supports a first operation on a elliptic curve of a second type, the system configured to:

for a first value corresponding to a first point on a first elliptic curve of a first type defined on a finite field, obtaining a second value corresponding to a second point on a second elliptic curve of the second type defined on the finite field; performing, on the first processor module, a first operation using the second value to determine a third value corresponding to a third point on the second elliptic curve; and
transforming the third value to a fourth value corresponding to a fourth point on the first elliptic curve.

In an embodiment, transforming the third value to the fourth value is performed at least in part on a second processor module.

In an embodiment, the second processor module is a general processor module within a hardware security module device and wherein the first processor module is a hardware coprocessor within the hardware security module device.

In an embodiment, the second processor module is a general processor module within a first computing device and the first processor module is within a smartcard device.

In an embodiment, the system further comprises a memory storing one or more constants defining the second elliptic curve, wherein the memory further stores the second value.

According to another aspect, there is provided a carrier medium comprising computer readable code configured to cause a computer to perform any of the above described methods. According to another aspect, there is provided a non-transitory computer readable storage medium comprising program instructions stored thereon that are executable by a computer processor to perform any of the above described methods. The methods are computer-implemented methods. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium. According to a further aspect, there is provided a carrier medium comprising computer readable code configured to cause a computer to perform any of the above described methods.

Public key cryptographic approaches are generally based on a "one-way function". For a one-way function, it is computationally easy to compute an output for a given input, however computing the input from a given output is computationally hard. Elliptic Curve Cryptography (ECC) is an approach to public key encryption that has become increasingly popular. ECC describes a cryptographic technique in which elliptic curves are used for key agreement schemes, key generation, digital signatures, pseudo-random generators or other cryptographic algorithms.

An elliptic curve is a curve that can be written in the Weierstrass form. The Weierstrass equation comprises two variables x and $y$, and is second degree for one of the variables and third degree for the other variable. Elliptic curves defined over finite fields are used in many cryptographic applications. The defined elliptic curve has a finite number of points with coordinates in the finite field F. Here, we will describe elliptic curves which are defined over a prime field. However, an elliptic curve may be defined over a finite binary field for some cryptographic applications for example. In the prime case, the field $F_p$ is defined by a large prime number p, and comprises the set of integers from 0 to $p$ - 1 inclusive, where the addition and the multiplication of these are performed modulo $p$.

Many standards for ECC, such as ANSI X9.63 and NIST's FIPS 186 series, use elliptic curves defined using the Weierstrass equation, in other words the elliptic curve is defined by the values of the parameters a and b of the Weierstrass equation. An elliptic curve defined using the Weierstrass equation is also referred to herein as a Weierstrass type curve or a just a Weierstrass curve. A Weierstrass curve defined on the prime field $F_p$ comprises the points satisfying the following equation:

$$y^2 = x^3 + ax + b \qquad\qquad (1)$$

together with a point at infinity, denoted as $\Omega$. Here, x and y are the co-ordinates of a point on the curve, whereas a and b are constants. The elliptic curve is therefore defined using the parameters a and b of the Weierstrass equation above. The values of x, y, a and b belong to $F_p$. All calculations based on the curve are performed modulo p, and the equation may also be written as: $y^2 = x^3 + ax + b$ (*mod p*).

Choosing the a, b and p values which describe a particular curve is a complex process, and therefore several bodies have published "standard" sets of these values for use by the cryptographic community. These curves are known by shorthand names, such as "NIST P256" or "Brainpool P256t1".

Various cryptographic algorithms can be performed by performing operations using points on the curve. For example, a Diffie-Hellman key exchange scheme is an example of a key agreement scheme that can be performed using an elliptic curve. In an example such scheme, two parties, Alice and Bob wish to perform secure communication between them. The two parties, Alice and Bob agree the a, b and p values which describe a Weierstrass curve - for example, they may agree on a standard set of these values. They also agree on a base-point G, corresponding to a point $(x_G, y_G)$ on the defined curve. Again, this may be defined in the standard.

Alice generates a private key, which is an integer $k_1$. Alice generates a public key $P_1$, which is a point on the curve generated by a "point-multiplication" operation $k_1.G$ . The "point-multiplication" operation is denoted herein by '.' (a dot sign), and will be described below.

Bob generates a private key, which is an integer $k_2$, and generates a public key $P_2$ being a point on the curve generated by the "point-multiplication" operation $k_2.G$ .

Alice sends Bob her public key, which corresponds to point $P_1$ on the curve. Bob sends Alice his public key, which corresponds to point $P_2$ on the curve.

Alice computes the point K on the curve, corresponding to $(x_k, y_k) = k_1.P_2$ . Bob also computes the point K on the curve, but his calculation is performed as $k_2.P_1$ . The shared secret key is $x_k$ , which can then be used by Alice and Bob to encrypt and decrypt communications.

In the above key exchange scheme, a "point multiplication" operation was used, which will now be described in more detail. The "point multiplication" operation may be performed using "point addition" and "point doubling" operations. In order to describe the "point-multiplication" operation, the "point addition" operation will therefore first be described. In the "point addition" operation, two points on the curve are "added" to give the co-ordinates of a third point on the curve. The "point addition" operation is denoted here by '+' (a plus sign).

Given two points P and Q on an elliptic curve defined using the Weierstrass equation (1) above, the "point addition" operation P + Q geometrically represents the further point of intersection with the elliptic curve of the line passing through the points P and Q. The coordinates of the point P are $(x_P, y_P)$ and the coordinates of the point Q are $(x_Q, y_Q)$. The coordinates of the point R = P+Q are $(x_R, y_R)$, given by:

$$x_R = \left(\frac{y_Q - y_P}{x_Q - x_P}\right)^2 - x_P - x_Q$$

$$(2)$$

$$y_R = \left(\frac{y_Q - y_P}{x_Q - x_P}\right)(x_P - x_R) - y_P$$

$$(3)$$

As explained above, these calculations are performed modulo p. To perform the point addition operation, the above calculations in (2) and (3) are performed.

A point on an elliptic curve defined using the Weierstrass equation can also be "doubled" to give another point on the curve. The "point doubling" operation may be represented as 2.P, where P is a point on the elliptic curve having coordinates $(x_P, y_P)$. The point 2.P represents the point of intersection between the elliptic curve and the line which is a tangent to the point P on the curve. The coordinates of the point 2.P = R are given by:

$$x_R = \left(\frac{3x_P^2 + a}{2y_P}\right)^2 - 2x_P$$

$$(4)$$

$$y_R = \left(\frac{3x_P^2 + a}{2y_P}\right)(x_P - x_R) - y_P$$

$$(5)$$

As explained above, these calculations are also performed modulo p. To perform the point addition operation, the above calculations in (4) and (5) are performed.

By repeated addition and/or doubling, a "point multiplication" operation is performed. For example, the point multiplication operation 3.P may be performed by performing the doubling operation T = 2.P followed by the addition operation T+P. The point multiplication operation 4.P may be performed by performing the doubling operation T = 2.P followed by another doubling operation 2.T, and so on. The point multiplication operation is a fundamental component of many ECC algorithms, such as Elliptic Curve Diffie-Hellman (ECDH) and Elliptic Curve Digital Signature Algorithm (ECDSA).

The security of these cryptographic algorithms depends on the ability to compute a point multiplication (for example k.P) and the inability to compute the multiplicand (in this case k) given the original (P) and product points (k.P). The point multiplication operation is an example of a one-way function. In other words, it is computationally easy to compute an output k.P for a given input k, however computing the input k from a given output k.P is computationally difficult.

To implement the point addition, point doubling and point multiplication operations on one or more points on an elliptic curve defined using the Weierstrass equation, the point may be represented in projective coordinates, and the operations performed using the projective coordinates.

To obtain a useful level of security, the calculations must be done with large numbers, in other words p and k must be large. As a result of this, a "point multiplication" on the NIST P256 curve may require 300 or more point-addition or point-doubling calculations, each of which needs a dozen or so operations on 256-bit integers. This can be slow when implemented on a CPU for example.

Consequently, hardware implementations which are specifically configured to perform a point addition, point doubling and/or point multiplication operation based on a Weierstrass elliptic curve are available. These may be in the form of an application specific integrated circuit (ASIC) which has the point addition, point doubling and/or point multiplication calculations efficiently implemented directly in hardware.

Such devices are referred to as hardware coprocessors, and often accommodate many different standard curves defined using the Weierstrass equation. The user can therefore simply supply the a, b and p values defining the curve when requesting a point-multiplication operation. Using such devices may allow thousands or tens of thousands of operations per second to be completed for example.

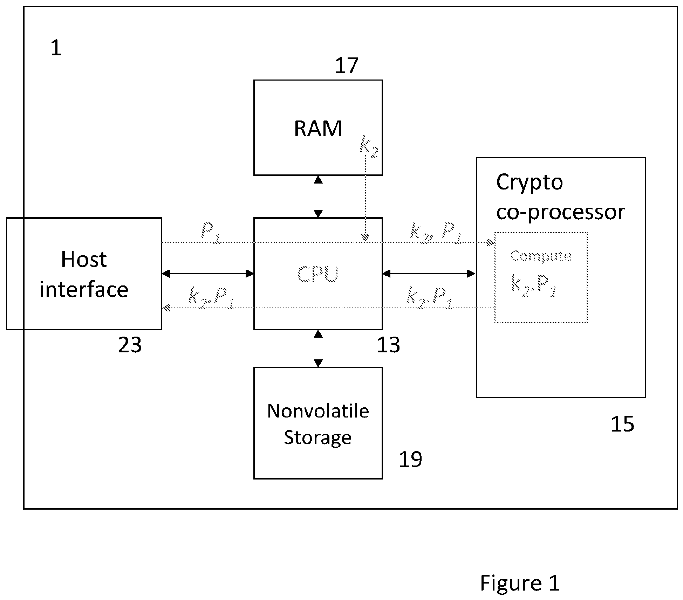

Figure 1 is a schematic illustration of a hardware security module device 1 comprising a crypto co-processor 15. The crypto co-processor 15 is a hardware co-processor which is configured to perform a point multiplication operation based on an elliptic curve defined using the Weierstrass form. In other words, a point multiplication operation based on an elliptic curve defined using the Weierstrass form is implemented directly in hardware on the co-processor 15.

The device 1 is used to perform a Diffie-Hellman key exchange scheme. For example, the device 1 is used by Bob's system to perform the operations of the Diffie-Hellman key exchange scheme described above. Bob's system communicates with the device 1 through a host interface 23. The device 1 comprises a RAM 17, which stores Bob's private key $k_2$. The device 1 further comprises non-volatile storage 19 and a CPU 13. In order to perform the key exchange, Alice sends her public key $P_1$ to Bob's system. Bob provides the public key $P_1$ to the device 1 through the host interface 23. The CPU 13 sends Bob's private key $k_2$ and Alice's public key $P_1$ to the crypto co-processor 15, which performs the point multiplication operation using the specified elliptic curve (in other words, the curve defined with the specified values a, b and p agreed upon between Bob and Alice). The crypto co-processor 15 performs the point multiplication operation using the Weierstrass curve specified by the values a, b and p and returns the resulting $k_2.P_1$ point coordinates to the CPU 13. The result is provided to Bob's system, which then extracts the shared secret key $x_k$. This can then be used by Alice and Bob to encrypt and decrypt communications between them.

In the above described system, a crypto co-processor 15 which supports a point multiplication operation based on a curve defined using the Weierstrass equation is used when implementing a cryptographic algorithm in order to perform the operation more efficiently. However, for many cryptographic applications, elliptic curves defined differently may be used. For example, in recent years, elliptic curves defined using the Montgomery equation have received attention from the cryptography community. An elliptic curve defined using the Montgomery equation, in other words defined by the values of the parameters of the Montgomery equation, is also referred to here as a Montgomery curve. A Montgomery curve is the set of points satisfying the following equation defined over a finite field $F_p$:

$$By^2 = x^3 + Ax^2 + x \tag{6}$$

together with a point at infinity, denoted as $\Omega$. Here, A and B are constants, the values of which define the curve. Arithmetic is performed modulo p, where x and y are the co-ordinates of a point on the curve. The values of x, y, A and B belong to $F_p$, in other words are integers lower than p.

Operations such as "point addition", "point doubling" and "point multiplication" can be performed using points on Montgomery curves in a similar way to Weierstrass form curves. However, the formulae for these operations, expressed in terms of the x and y co-ordinates of the starting point(s), are different for each type of curve. For a Montgomery curve, for a first point, P having coordinates $(x_P, y_P)$ and a second point Q having coordinates $(x_Q, y_Q)$, the coordinates of the point R = P+Q are $(x_R, y_R)$, are given by:

$$x_R = \frac{b(x_Q y_P - x_P y_Q)^2}{x_P y_Q (x_Q - x_P)^2}$$

$$(7)$$

$$y_R = \frac{(2x_P + x_Q + a)(y_Q - y_P)}{x_Q - x_P} - \frac{b(y_Q - y_P)^3}{(x_Q - x_P)^3} - y_P$$

$$(8)$$

For a Montgomery curve, for a first point, P having coordinates ($x_P$, $y_P$), the coordinates of the point R = 2.P are given by:

$$x_R = \frac{(x_P^2 - 1)^2}{4x_P(x_P^2 + ax_P + 1)}$$

$$(9)$$

$$y_R = \frac{(2x_P + x_P + a)(3x_P{}^2 + 2ax_P + 1)}{2by_P} - \frac{b(3x_P{}^2 + 2ax_P + 1)^3}{(2by_P)^3} - y_P$$

$$(10)$$

Because the calculations are different, the crypto co-processor device 15 used in the system of Figure 1 is not configured to perform the point addition, point doubling or point multiplication operations for Montgomery curve points. In other words, the crypto co-processor 15 does not support operations on curves defined using a Montgomery equation, in other words defined using the constants A and B of Equation (6) above. The operations must instead be implemented in software and executed entirely on the CPU 13, and so do not benefit from the increased speed of the dedicated hardware device 15.

In some cases, the crypto co-processor device 15 may be configured to perform more general operations such as modular addition, modular subtraction, modular exponentiation and so on. In this case, the crypto co-processor 15 could be used to perform a point multiplication operation using a point on the Montgomery curve by sending various component operations of the point multiplication operation (modular addition, modular subtraction and so on) in turn from the CPU 13 to the crypto co-processor 15, and returning the results to the CPU 13. However, it is not possible to pass the entire point multiplication to the crypto co-processor 15 as a single operation, since this operation is not supported, and therefore reduced benefit or no benefit is obtained from the increased speed of the crypto co-processor 15.

For example, the X25519 and Ed25519 cryptographic algorithms use Montgomery curves. These may be implemented on the CPU 13 by loading software implementing the operations into the RAM 17 and executing the software using the CPU 13. In other words, the operations are implemented in software or firmware. Whilst there are high-speed software implementations of these algorithms, these may use instructions or CPU features which may not be available on an embedded CPU 13 used in HSM 11 for example.

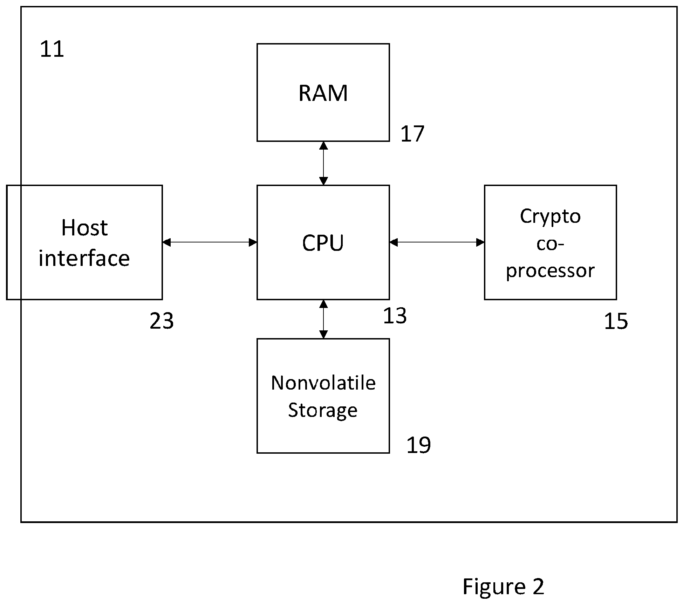

Figure 2 is a schematic illustration of a device 11 in a system according to an embodiment. The device is a hardware security module device 11 (HSM). The hardware security module device 11 is configured to perform cryptographic functions for a client. The term 'client' is used throughout the description to refer generally to a user of the HSM device 11.

The hardware security module device 11 comprises a central processing unit (CPU) 13. The CPU 13 is in wired bi-directional communication with non-volatile storage 19. The non-volatile storage 19 may include any form of non-volatile device memory such as flash, optical disks or magnetic hard drives, for example. The non-volatile storage 19 may be physically secure and may be resistant to tamper by a third party, for example by the inclusion of physical security such as a membrane that covers the entire device, that cannot be removed without destroying the underlying physical hardware, thus making it un-usable. The non-volatile storage 19 may store cryptographic information associated with the client, for example it may store one or more private keys.

The CPU 13 is also in wired bi-directional communication with working memory 17, corresponding to Random Access Memory 17. RAM 17 corresponds to operating memory of the CPU 13. The CPU 13 may comprise logic circuitry that responds to and processes the instructions in code in the RAM 17. In particular, when executed, a program is represented as a software product, or process, stored in the RAM 17. Execution of various programs by the CPU 13 will cause methods as described herein to be implemented.

The programs may be referred to as "firmware" in this description, however generally the programs comprise a set of computer instructions stored in non-volatile memory 19 on the HSM device 11 and embodying the functionality as will be described in relation to the methods below. The computer instructions, or firmware, may be written in any of a number of programming languages, and may be stored on the HSM device 11 as compiled code. The firmware can be embedded in the hardware security module 11 when it is manufactured, or can be provided, as a whole or in part, after manufacture. For instance, the firmware can be introduced as a computer program product, which may be in the form of a download. Alternatively, modifications to existing firmware can be made by an update, or plug-in. In order to enforce security, only software from a trusted party is accepted. Digital signing processes can be used to enforce this, and the software may be provided in a command through the host system device.

The HSM device 11 is located in a host system (not shown), for example a service provider system or a client system. The HSM 11 is communicatively coupled to a computer or server device in the host system, via host interface 23. For example, the HSM device 11 may be a PCI-express card, directly plugged in to a PCI-express card slot of the host system device. Alternatively, the HSM device 11 can be coupled by a USB connection for example.

In one arrangement, a separate client system is located remotely from the host system. The host system is a service provider system. The client system comprises a computing device or server device. The client system is communicatively coupled to the computer or server device in the host system, and thus is communicatively coupled to the HSM device 11 through the computer or server device in the host system. Communication between the client system and the host system is performed over a communication network. Communication between the client system and the host system may be performed via an Internet connection for example. In this way, multiple clients may use a HSM device 11 hosted by the service provider. The service provider system may comprise a large number of HSM devices coupled to the host computer or server device.

Alternatively, the HSM 11 is directly coupled to a computer or server device in a client system, via host interface 23. For example, the HSM device 11 may be a PCI-express card, directly plugged in to a PCI-express card slot of the client system device. Alternatively, the HSM device 11 can be coupled by a USB connection for example.

In use, the HSM device 11 receives client requests through host interface 23. The requests may correspond to performance of one or more cryptographic functions such as cryptographic key exchange as described previously. For example, a Diffie-Hellman key exchange process may be performed, in which the client receives the public key of a third party with whom they wish to communicate. This is provided to the HSM 11 via the host interface 23, together with the parameters a, b and p describing the elliptic curve which have been agreed with the third party, and a request to generate a key for communication with the third party using the Diffie-Hellman process described above.

The hardware security model 11 further comprises a crypto co-processor 15. The CPU 13 is in wired bi-directional communication with the crypto co-processor 15. For example, the CPU 13 may communicate with the crypto co-processor 15 via a PCIe interface.

The crypto-coprocessor 15 in this example is an application-specific integrated circuit (ASIC). The ASIC is configured to perform a point addition, point doubling and/or point multiplication operation based on one or more Weierstrass elliptic curves. In particular, the ASIC comprises fixed logic circuitry configured to receive as input one or more points on a Weierstrass elliptic curve and output the result of a point addition, point doubling or point multiplication operation. In such devices, the point addition, point doubling and/or point multiplication operations are implemented directly in hardware. Examples of such devices include the NXP C291 Crypto Coprocessor, the NXP C292 Crypto Coprocessor, the NXP C293 Crypto Coprocessor, the MaxLinear 9240 Data Compression and Security Coprocessor, and the Intel QuickAssist Adapter 8950.

The crypto co-processor 15 may comprise multiple processing modules, also referred to as crypto engines. The crypto engines may be configured to concurrently perform the point operations and thus more than one point operation may be performed at the same time. The crypto co-processor 15 is also referred to as a hardware coprocessor, and in this example is an ASIC. It is used to speed up Elliptic Curve calculations. It supports only operations using elliptic curves defined with the Weierstrass equation. In other words, the parameters used to define the curves are those of the Weierstrass equation.

The crypto co-processor 15 is configured to receive requests to perform one or more operations from the CPU 13 and to return to the CPU 13 the output of the operation. The CPU 13 is configured to off-load various operations to the crypto co-processor 15. The crypto co-processor 15 is separate to the CPU 13, and configured to perform certain operations in hardware, meaning that these operations may be performed more efficiently on the crypto co-processor 15 than on the CPU 13. Operations may be performed on the crypto co-processor 15 concurrently with operations performed on the CPU 13.

In the device 11 shown in Figure 2, the CPU 13 runs software kept in the non-volatile storage 19, and the crypto co-processor 15 has fixed implementations, in other words hardware implementations, of cryptographic primitives, such as Weierstrass-form point multiplication. The RAM 17 keeps working data, including keys and other secrets used in computations.

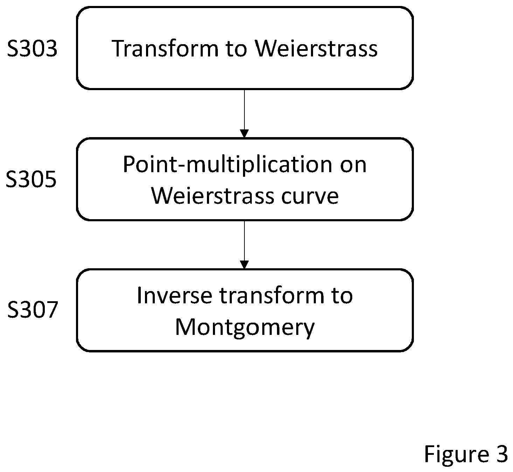

Figure 3 is a flow chart showing a method according to an embodiment. The method is implemented on the device 11 of Figure 2. This method may be performed as part of a cryptographic algorithm, for example a Diffie Hellman key exchange process as described above.

In this method, for a specific Montgomery curve described by values A, B and p, it is desired to perform a point multiplication operation k. P for a point P on the Montgomery curve. The crypto co-processor 15 is specifically configured to perform a point multiplication operation for a point on a Weierstrass curve however. For example, the crypto co-processor 15 is configured to perform point addition and point doubling operations for any Weierstrass curve, where the a, b, and p values identifying the curve are passed to the crypto co-processor 15 when an operation is requested. In order to efficiently perform the desired operation using the crypto co-processor 15, the point on the Montgomery curve is transformed to a point on a Weierstrass curve using a mapping, and the point multiplication operation is performed using the point on the Weierstrass curve. The output point on the Weierstrass curve which results from the point multiplication operation is then transformed back to a point on the Montgomery curve.

In step S303, first values corresponding to a first point P on a Montgomery elliptic curve $M_1$ defined on a finite field $F_p$ are transformed to second values corresponding to a second point P' on a Weierstrass elliptic curve $W_1$ defined on the finite field $F_p$.

The Montgomery curve $M_1$ is the set of points satisfying the following equation defined over the finite field $F_p$:

$$By^2 = x^3 + Ax^2 + x \qquad (11)$$

together with a point at infinity, denoted as $\Omega$, where A, B and p are values describing the curve. The first values corresponding to a first point on the Montgomery curve $M_1$ are the x and y coordinates of the point P, referred to here as $(x_P, y_P)$.

In this step, the first values $x_P$ and $y_P$ are transformed to second values $u_{P'}$ and $v_{P'}$ corresponding to a second point P' on a Weierstrass elliptic curve defined on the finite field $F_p$. In this step, mappings between the various forms of elliptic curves are used.

For $x_P$ and $y_P$ satisfying the Montgomery Equation (11) above, it is possible to find u and v values satisfying a Weierstrass equation:

$$v^2 = u^3 + au + b$$

$$(12)$$

The mapping of a point on a Montgomery curve to a point on a Weierstrass curve is written as $\psi(x, y) \rightarrow (u, v)$. The determination of the second point $(u_{P'}, v_{P'})$ satisfying the above Weierstrass equation from the first point $(x_P, y_P)$ satisfying the above Montgomery equation is performed using the following calculations, where the calculations are performed modulo p:

$$u = \frac{x}{B} + \frac{A}{3B}$$

$$(13)$$

$$v = \frac{y}{B}$$

$$(14)$$

and where A and B are the constants defining the Montgomery equation. The determination of the second values $u_{P'}$ and $v_{P'}$ from the first values $x_P$ and $y_P$ using the mappings in Equations (13) and (14) may be performed on the CPU 13. Alternatively, the CPU 13 may pass one or more of the component operations to the crypto co-processor 15. For example, the mappings comprise modular addition and modular multiplication operations, which may be passed individually to the crypto co-processor 15. The crypto co-processor 15 performs the individual operations and returns the results to the CPU 13.

In step S305, the point multiplication operation k.P' is performed, using the second point P', which is a point on the Weierstrass curve. The point multiplication operation is performed on the crypto co-processor 15.

In order to perform the point multiplication operation, the a and b constants must be determined for the Weierstrass curve. The values of constants a and b are therefore determined using the following calculations, which are performed modulo p:

$$a = \frac{(3 - A^2)}{3B^2}$$

(15)

$$b = \frac{(2A^3 - 9A)}{27B^3}$$

(16)

The a and b values are constants, depending only on A and B, therefore all the resulting (u,v) values are points on the same Weierstrass curve.

The point multiplication k.P' is performed as has been described previously, by the crypto co-processor 15, which is configured to perform the point multiplication operation of a point on a Weierstrass curve in hardware. In this step, a point multiplication operation is performed using the point P' on the Weierstrass curve described by a, b and p, to determine a point S' on the Weierstrass curve.

The coordinates of the point P' are provided to the crypto co-processor 15, together with the a and b values and the prime number p describing the curve. The integer value k is also provided to the crypto co-processor 15, which performs the point multiplication operation on the Weierstrass curve, and provides an output to the CPU 31. The output is the coordinates of a third point S', which is a point on the Weierstrass curve. The coordinates of the third point are $u_{S'}$ and $v_{S'}$. These are also referred to as the third values.

In step S307, the third values are transformed to fourth values $x_S$ and $y_S$ corresponding to a fourth point on the Montgomery curve $M_1$. This comprises performing the inverse transformation $\psi^{-1}$ of the third point S' on the Weierstrass curve $W_1$ to a fourth point S on the Montgomery curve $M_1$. Given a u, v pair, the transformation using the mapping $\psi$ can be reversed to give the x, y values. This inverse transformation is written $\psi^{-1}$. The inverse transformation uses a mapping from the u and v coordinates on the Weierstrass curve to x and y coordinates of the Montgomery curve. The x and y values are calculated using the below equations, which are performed modulo p.

$$x = \frac{3Bu - A}{3}$$

(17)

$$y = Bv$$

(18)

As described above, the determination of the fourth values $x_s$ and $y_s$ from the third values $u_{s'}$ and $v_{s'}$ using the mappings in Equations (17) and (18) may be performed on the CPU 13. Alternatively, the CPU 13 may pass one or more of the component operations to the crypto co-processor 15. For example, the mappings comprise modular subtraction and modular multiplication operations, which may be passed to the crypto co-processor 15. The crypto co-processor performs the operation and returns the result to the CPU 13. The fourth point S on the Montgomery curve $M_1$ corresponds to the point k.P .

Using this method, cryptographic standards based on Montgomery elliptic curves, such as X25519 key exchange or Ed25519 digital signature, can benefit from hardware acceleration using available ASIC devices which support Weierstrass curves. The method may be implemented on a hardware security module device 11 such as described in Figure 2, which provides cryptographic services to a host computer.

In the method of Figure 3, a mapping $\psi(x,y) \rightarrow (u, v)$ is used to transform a point on the Montgomery curve $M_1$ to a point on the Weierstrass curve $W_1$. The mapping $\psi$ preserves the structure of the curve. When two points on a Montgomery curve are added using the point addition operation and the result transformed using the mapping $\psi$, it gives the same result as first transforming the two points and then adding the results using the point addition operation. If P and Q represent different x,y points on a Montgomery curve, a point addition operation using Montgomery formulae is denoted by P+Q. A point addition operation using Weierstrass formulae is given by $\psi(P) + \psi(Q)$, where:

$$\psi(P + Q) = \psi(P) + \psi(Q)$$

(19)

Furthermore, a point doubling operation of point P using Montgomery formulae is denoted by 2.P. A point doubling operation using Weierstrass formulae is denoted by 2. $\psi(P)$, where:

$$\psi(2.P) = 2.\psi(P)$$

(20)

As discussed above, addition and doubling operations can be combined to give a point multiplication operation using Montgomery formulae, written *k.P,* where *k* is an ordinary integer. A point multiplication operation using Weierstrass formulae is denoted by k. $\psi(P)$, where:

$$\psi(k.P) = k.\psi(P)$$

(21)

Furthermore, point multiplication using a point P on a Montgomery curve is equivalent to first transforming to a point on a Weierstrass curve, performing the point multiplication operation, and then using the inverse mapping to transform the resulting point into a point on the Montgomery curve:

$$k.P = \psi^{-1}(k.\psi(P))$$

(22)

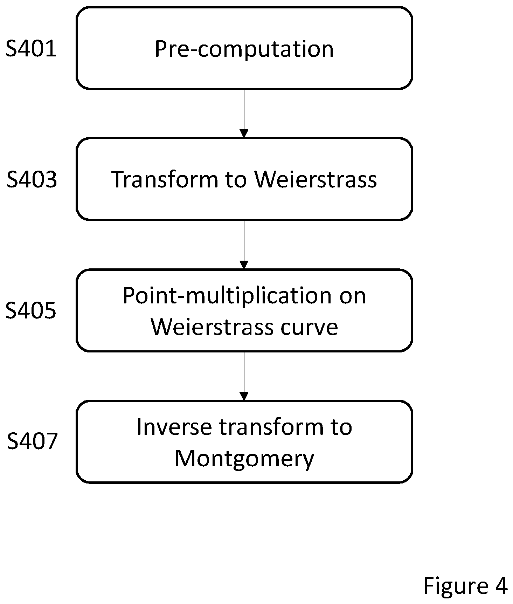

Figure 4 shows a flow chart of a method of performing a point-multiplication operation using the point P on the Montgomery curve $M_1$ according to an embodiment. In this method, a pre-computation step S401 is included. The method is performed using a hardware security module device 11 as described in relation to Figure 2. The point multiplication operation is implemented using Equation (22) above. The Equation (22) can be implemented using a combination of hardware and software (firmware) implementations.

In step 401, the values of constants a and b describing the Weierstrass curve are calculated using the Equations (15) and (16) above. The calculations may be performed entirely on the CPU 13, or the CPU 13 may pass one or more of the component calculations, for example a modular subtraction operation, to the crypto co-processor 15, the result then being passed back to the CPU 13.

The values of constants a and b are stored in the non-volatile memory 19 of the hardware security module 11. In this step, for the Montgomery curve $M_1$: $By^2 = x^3 + Ax^2 + x$ (mod p), the Weierstrass-equivalent a and b values are calculated and stored.

These values do not depend on the x and y coordinates of a point P. This means that the values of a and b can be pre-computed and stored for use with any operation using the curve $M_1$. Once the values are computed, there is no further impact on performance. The calculations may therefore be implemented in software which is executed using the CPU 13 for example.

For example, when the HSM 11 is initialised, the values of constants a and b may be calculated for various standard Montgomery curves. These constants are then stored in the HSM 11 for later use. For example, a look-up table may be stored in the non-volatile storage 19, comprising multiple entries. Each entry may comprise a set of parameters A, B and p describing a standard Montgomery curve, and a corresponding set of parameters a and b describing the corresponding Weierstrass curve. The entry corresponding to a particular Montgomery curve may then be retrieved as needed.

Optionally, additional constants may be calculated in this step, which are to be used in operations using the curve $M_1$. For example, it may be useful to store constant values such as (1/B) and (A/3B) to speed up the transform computations. Again, these calculations may be implemented in software which is executed using the CPU 13, as once executed there is no further impact on performance. The computed constant values are stored in the non-volatile storage memory 19 of the hardware security module 11. For example, these additional constants may also be stored in the lookup table with the entry for the relevant Montgomery curve. When a request to perform an operation using the Montgomery curve is received, the constant values may be retrieved and loaded in the RAM 17 by the CPU 13.

Performing the pre-computation of these values can result in further improved efficiency of operations using the Montgomery curve $M_1$ on the hardware security module 11, since the number of operations to be executed each time the transformation and the inverse transformation are performed is reduced.

To compute a point multiplication k.P, where P is a point on the Montgomery curve $M_1$, firstly the coordinates of the point P' = ψ (P) are computed. In step S403, the transformation of a point P on the Montgomery curve $M_1$ to a point P' on a Weierstrass curve is performed. As described previously, this step may be performed entirely on the CPU 13, or one or more of the component calculations may be passed to the crypto co-processor 14. This step may be performed using a software implementation. The transformation is performed by mapping the x coordinate value of the point P to the u coordinate of point P', and mapping the y coordinate value of the point P to the v coordinate of the point P' using Equations (13) and (14) above. The transformation may be performed using the stored values of (1/B) and (A/3B). The stored constants a and b are also retrieved.

In Step S405, the coordinates of the point P' on the Weierstrass curve, the constants a and b and prime number p describing the curve, and the value k used for the point multiplication operation are provided to the crypto co-processor 15, which will perform point multiplication operation k.P to determine a third point S' on the Weierstrass curve. The coordinates of the third point S' are returned to the CPU 13. In this step, the values of k, P', and the Weierstrass curve parameters a, b, and p are sent to the hardware accelerator 15, which then computes the point-multiplication result k.P'.

In Step S407, the third point S' is transformed to a fourth point S on the Montgomery curve $M_1$ using the inverse transformation. As described above, the determination of the fourth point S' may be performed on the CPU 13. Alternatively, the CPU 13 may pass one or more of the component calculations to the crypto co-processor 15. The fourth point S on the Montgomery curve $M_1$ corresponds to the point k.P. In this step, the final result k.P = $ψ^{-1}(k.P')$ is computed, using a software implementation.

In the above method, the ψ transformation requires just two multiplications and an addition mod p, as does the inverse transformation $ψ^{-1}$. Both steps S403 and S407 are quick to perform, even in a software implementation. The hardware accelerator 15 is used to perform operations on Weierstrass format curves. It can also be used to perform parts of the transformation if this is determined to be more efficient.

In the above described methods, a point multiplication operation is described. However, it is understood that the methods may be used to perform other operations using points on the Montgomery curve. For example, the method may be used to perform a point addition operation using the point P and a second point Q on the Montgomery curve $M_1$. Alternatively, the method may be used to perform a point doubling operation using the point P. Alternatively, the method may be used to perform an operation comprising a combination of the point addition, point doubling or point multiplication operations. For example, a cryptographic algorithm may comprise a point multiplication operation followed by a point addition operation. This may be implemented as a single operation in the coprocessor 15. In particular, the Elliptic Curve Digital Signature Algorithm (ECDSA) signature verification algorithm comprises a step comprising a point multiplication (*p. G*) and point multiplication (*r. H*), the results of which are taken as input to a point addition. The point multiplication (*p. G*), point multiplication (*r. H*) and point addition (*p. G*) + (*r. H*) may be implemented as a single operation in the coprocessor, and where p, r, G and H are the inputs to the operation. In particular, various "arithmetic" operations using one or more points on the Montgomery curve may be performed using the method. Such operations take as input the *x* and *y* coordinates of one or more points on the curve, and output the x and y coordinates of a further point on the curve.

For example, a first point P may be 'added' to a further point Q on the curve as has been described previously. The result is the x and y co-ordinates of a fourth point R on the curve. To perform a point addition operation, the first point P on the Montgomery curve is transformed to a second point P' on a Weierstrass curve using the mapping in Equations (13) and (14) above. The further point Q on the Montgomery curve is also transformed to a second further point Q' on the Weierstrass curve using the same mapping, in other words the same Equations (13) and (14), with the same values of A and B. A point addition operation of the second point P' and the second further point Q' is then performed using the Weierstrass formulae in Equations (7) and (8), which may be implemented using projective coordinates. The resulting third point R' on the Weierstrass curve is then transformed to a fourth point on the Montgomery curve using the mapping in Equations (17) and (18).

Furthermore, a point P on the curve may be 'doubled' - this corresponds to performing addition of the point P with itself. As described above, the point multiplication operation comprises one or more addition and/or doubling operations. Point multiplication is the product of the point P with a scalar n, or the addition of the point to itself n number of times.

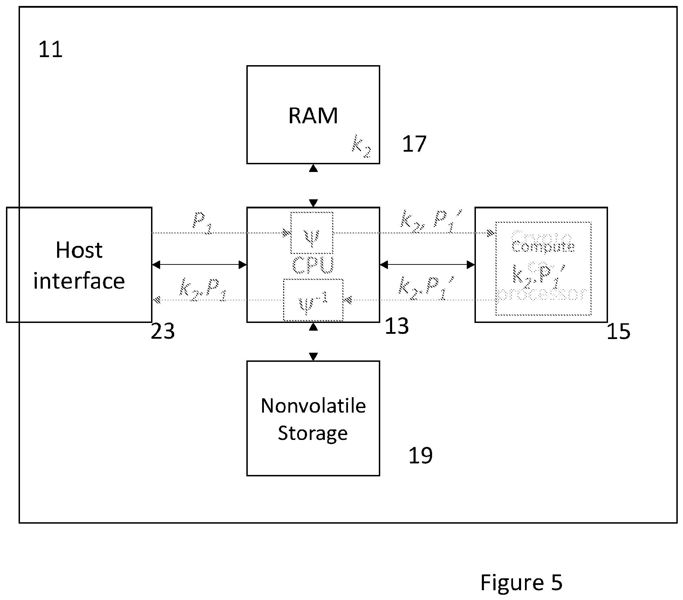

Figure 5 is a schematic illustration of a hardware security module 11 implementing a Diffie-Hellman key exchange scheme using a method according to an embodiment.

As described previously, in this scheme, two parties, Alice and Bob wish to perform secure communication between them. In this example however, the parties wish to base the generation of the key on a Montgomery curve. The two parties, Alice and Bob agree the A, B and p values which describe a Montgomery curve and a base-point G - for example, they may agree on a standard set of these values.

The hardware security module 11 stores Bob's private key $k_2$, which is stored in the non-volatile storage 19 of the HSM 11 as Bob's private key.

Alice sends Bob her public key, which corresponds to point $P_1$ on the curve. Bob provides Alice's public key $P_1$ to the HSM 11 through the host interface 23, together with a request to perform the key exchange scheme and the parameters A, B and p describing the curve.

The crypto co-processor 15 supports a point multiplication operation on a Weierstrass curve. However, it does not support a point multiplication operation on a Montgomery curve. The point $P_1$ on the Montgomery curve is therefore transformed into a point $P_1'$ on a Weierstrass curve described by the parameters a, b and p. The values of a and b may have been pre-computed as described in Figure 4, in which case they are simply retrieved from storage. Alternatively, the values of a and b are calculated at this stage using the mappings in Equations (15) and (16). The coordinates u and v of the point $P_1'$ on the Weierstrass curve described by the parameters a, b and p are then calculated using the mappings in Equations (13) and (14).

Bob's private key $k_2$ is loaded into the RAM 17, and a request to perform $k_2.P_1'$ is then sent to the crypto co-processor 15, together with the parameters a, b and p describing the Weierstrass curve. The point multiplication operation $k_2.P_1'$ is performed by the crypto co-processor 15, using hardware configured to perform this operation. The result K' is then returned to the CPU 13.

The inverse transformation is then performed on the point K', following Equations (17) and (18) above, to provide the point K on the Montgomery curve. The point K corresponds to the point $k_2.P_1$. This is provided to Bob through the host interface 23. The shared secret key is $x_k$, the x coordinate of the point K, which can then be used by Alice and Bob to encrypt and decrypt communications.

Figure 5 illustrates how an Elliptic Curve Diffie-Hellman (ECDH) operation can be performed for Montgomery curves, using the method described in relation to Figures 3 and 4. For this operation, a public key in the form of Montgomery elliptic curve point $P_1$ is sent to the HSM 11, to be combined with a private key $k_2$ kept in the HSM's working memory 17 using point multiplication. The result $k_2.P_1$ is a 'shared secret' value returned to the host.

In the method described in relation to Figure 5, the following steps are performed. A point $P_1$ (a point on a Montgomery-form curve) is received from the host interface 23. The CPU 13 computes $\psi(P_1)$, to obtain a point $P_1'$ on the equivalent Weierstrass-form curve. The CPU 13 supplies $P_1'$, and the private key value $k_2$, to the cryptographic co-processor 15. The crypto co-processor 15 computes $k_2.P_1'$, and returns this to the CPU 13. The CPU 13 computes $\psi^{-1}(k_2.P_1')$ to obtain $k_2.P_1$. This is the desired result, which is then returned to the host.

The point multiplication function $k_2.P_1$ used to generate the shared key is an example of a one-way function. The point multiplication function $k_2.P_1$ is computationally straightforward to compute. However, inverting the function to compute the value $k_2$ is a computational complex problem. In elliptic curve cryptography, this is referred to as the EC discrete logarithm problem (ECDLP).

Other algorithms, such as ECDSA or EdDSA, may be performed in a similar manner. For these algorithms, additional processing is performed before and after the main point-multiplication operation, but the interaction with the crypto co-processor 15 follows the same steps described above.

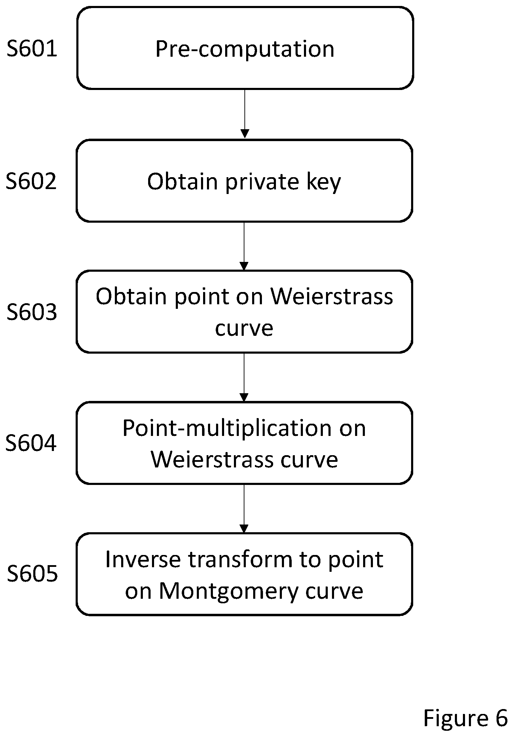

In the above described Diffie-Hellman key exchange scheme, Bob uses a public key provided by Alice, and also provides his own public key $P_2$ to Alice. This public key $P_2$ is also generated using a point multiplication operation on the HSM 11. Figure 6 is a flow chart of a method of generating the public key $P_2$ used in the key exchange method described in relation to Figure 5.

In this method, a point multiplication operation is used to compute the public key counterpart $P_2$ of the private key $k_2$. While the public key $P_2$ is to be openly distributed, the private key $k_2$ is to be kept secret. For example, the private key $k_2$ may be stored in the non-volatile storage 19 of the hardware security module 11. As described above, the public key and private key can be used to generate a shared secret key between two parties in a key exchange algorithm such as that described in relation to Figure 5.

The set of parameters A, B and p describing the Montgomery curve are agreed between Bob and Alice. Bob and Alice also agree a parameter G, which is a point on the curve referred to as a base point or a generator. A parameter n is the order of G, where the value of n is the smallest positive number such that $n.G = \Omega$ (the point at infinity of the curve). The value of n can be thought of as the number of possible points that can be generated through point multiplication of G. A further parameter h is the cofactor. The parameters [A, B, p, G, n and h] are referred to as the domain parameters, and these describe the Montgomery curve. As explained above, Alice and Bob would not usually generate a set of domain parameters themselves, but rather agree on a set of domain parameters published by a standard body. Such standard sets of domain parameters may also be referred to as "standard curves".

To generate the public key $P_2$, the point multiplication operation $P_2 = k_2.G$ is performed. Each time a new public and private key pair are generated, the multiplicand k varies but G is fixed in advance. Since G is fixed, $\psi(G)$ is also fixed, and can be pre-computed and stored in the non-volatile memory 19. For example, each entry in the look-up table described previously may comprise a set of domain parameters [A, B, p, G, n, h] describing a standard Montgomery curve, and a corresponding set of domain parameters [a, b, p, $\psi(G)$, n, h] describing the corresponding Weierstrass curve, where the order n and the co-factor h are the same for equivalent Montgomery and Weierstrass domain parameters.

The method in Figure 6 comprises a pre-computation step S601, in which given the domain parameters [A, B, p, G, n and h] describing the Montgomery curve, the values of constants a and b describing the Weierstrass curve are calculated using the Equations (15) and (16) above. The point $\psi$ (G) is also calculated using the Equations (13) and (14) described above. The point $\psi$ (G) is also referred to as G', and is found by transforming the point G on the Montgomery curve to a point on the Weierstrass curve. The calculations may be performed entirely on the CPU 13, or the CPU 13 may pass one or more of the component calculations (for example a modular subtraction operation) to the crypto co-processor 15 to perform, the result being passed back to the CPU 13. The values of constants a and b and the point $\psi$ (G) are stored in the non volatile memory 19 of the hardware security module 11. The pre-computation step may be performed once, at initialisation of the HSM 11 for example.

Given the set of domain parameters, the HSM 11 generates Bob's private key in S602 by randomly selecting an integer $k_2$ in the interval [1, n - 1]. The private key $k_2$ is stored in the RAM 17.

In S603, the generator point G' on the Weierstrass curve corresponding to the transformed point $\psi$ (G) is obtained. The generator point G' is retrieved from storage 19 and loaded into the RAM 17 for example. The parameters of the Weierstrass curve a and b are also retrieved.

In S604, the parameters of the Weierstrass curve a, b and p, the generator point G' on the Weierstrass curve and the private key $k_2$ are provided to the crypto co-processor 15 to perform the point multiplication operation, which is performed as has been described previously. The point multiplication $k_2$.G' is performed, resulting in the point $P'_2$.

In S605, the inverse transform $\psi^{-1}$ ($P'_2$) is performed using the mapping in Equations (17) and (18) to give the public key $P_2$. The public key $P_2$ is provided to Bob through the host interface 23,

In this method, the counterpart public key $P_2$ is generated using the private key value $k_2$ by performing point multiplication operation of G with the integer value $k_2$. The public key is the resulting point $k_2$.G on the Montgomery elliptic curve.

In many ECC applications, such as ECDSA, or ECDH public key generation described above, the point being multiplied is the fixed 'generator' value G. The transform of the generator point G on the Montgomery curve can be performed in advance, during the pre-computation stage. The transformed point G' on the Weierstrass curve is then stored on the HSM device 11 and retrieved when needed. It is not required to perform the transform of the generator point G each time a public key is to be generated.

When a point multiplication operation is requested, an initial step may then be performed comprising determining whether input point P is the generator point G. If the input point P on the Montgomery curve for which an operation is requested is the generator point G, the transform $\psi$ is not performed, and the pre-computed G' value is instead obtained from memory.

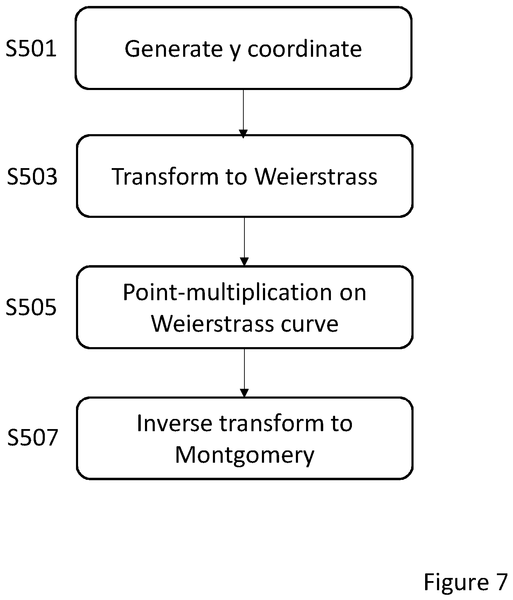

Systems using a Montgomery curve such as the X25519 key-exchange scheme may exchange only the x co-ordinate of a point, because it is possible to perform the Montgomery point multiplication calculation without requiring the y co-ordinate value. Figure 7 is a schematic illustration of a method according to an embodiment, in which Alice sends Bob only the x coordinate of the point $P_1$ (her public key), and Bob wishes to perform an point multiplication operation with the point $P_1$ as has been described previously.

It is not possible to perform the Weierstrass point multiplication calculation without the y coordinate value. For this reason, an additional initial step S501 of determining the y coordinate of the point P on the Montgomery curve is performed.

When a Montgomery curve point is received in "x co-ordinate only" form, a step S501 of calculating a corresponding y value for use with the $\psi$ transformation is performed, using the formula:

$$y = \sqrt{\frac{x^3 + Ax^2 + x}{B}}$$

(23)

where the calculation is performed modulo p.

The calculation outputs two possible y values, which correspond to two possible points P and -P. Either point may be chosen, since the point multiplication will calculate either k.P or -k.P, and the x-coordinate of these will be the same. The calculation of the y coordinate may be performed entirely on the CPU 13 or using the crypto co-processor 15 to perform one or more component operations for example.

Once the y coordinate is found from Equation (23), the transformation of the x and y coordinates are performed as has been described previously in S503. In S503, the x and y values of point P on the Montgomery curve are transformed to a u and v coordinate of a second point P' on a Weierstrass curve. The point multiplication operation is then performed in S505 with the point P' by the coprocessor 15, resulting in a third point S' on the Weierstrass curve. The third point corresponds to a u value and a v value, which are the third values.

The inverse transform $\psi^{-1}$ is then performed in S507 on the u value, to give the x value of the point k.P (or -k.P) on the Montgomery curve. The x value can be determined entirely from the u value. The inverse transform is not performed on the v value, since the y co-ordinate is not required. Thus in this example, the inverse transform is performed on a single value corresponding to the third point.

The square root operation in Equation (23) described above may be time consuming to perform. Where the generator point G on a Montgomery curve is provided as an "x-coordinate only" point, pre-computation of the transformed point G' and storing of the point G' for future use is particularly beneficial, since the time-consuming square root operation can be performed in advance, and the result stored for future use. By storing the coordinates of the point G', the square root operation is not required to be performed each time the x coordinate of the generator point G is received for performance of an operation.

In the above described examples, an operation on a first point P on a Montgomery curve is to be performed. In order to perform the operation, the first point P on the Montgomery curve is transformed to a second point P' on a Weierstrass curve. The operation is then performed using the second point P', and the resulting point S' is transformed back to a point S on the Montgomery curve. Although the Montgomery curve is described as an example, other types of elliptic curve may be used instead.

Any elliptic curve can be written in Weierstrass form, and therefore an operation on a first point on a different type of elliptic curve may be performed in a similar manner, by transforming the first point to a second point on a Weierstrass curve. An operation on a point of an elliptic curve which is defined using an equation which is not the Weierstrass equation, in other words which is defined with parameters of an equation which is not the Weierstrass equation, may be performed by transforming the point to a point on a Weierstrass curve.

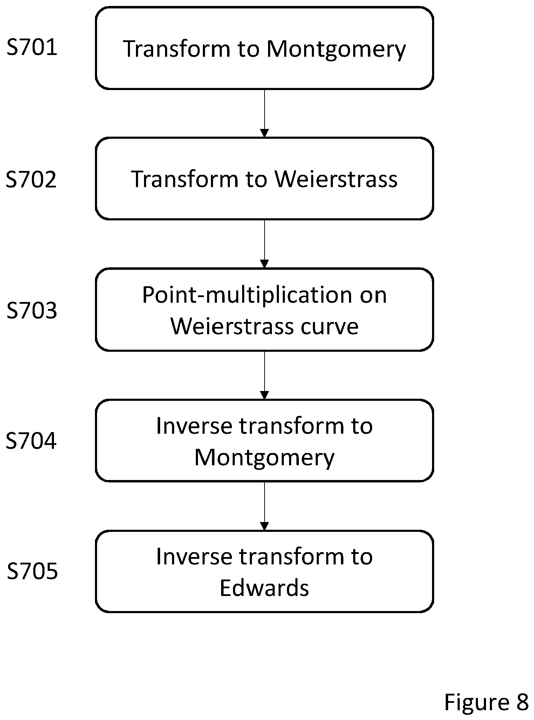

Figure 8 is a flow chart of a method according to an embodiment in which an operation on a first point on an elliptic curve defined using the Edwards equation is to be performed. An elliptic curve defined using the Edwards equation is also referred to herein as an Edwards type curve or just an Edwards curve. An Edwards elliptic curve comprises the set of points *(x,y)* satisfying the equation defined over a finite field $F_p$:

$$x^2 + y^2 = 1 + dx^2y^2$$

$$(24)$$

together with the identity element (0, 1). Here, d is a constant. The values of x, y and d belong to $F_p$. The calculations are done modulo *p*.

A transformation allows points on an Edwards curve to be transformed into their equivalents on a Weierstrass curve. In the example described herein, the transformation is performed in a two-stage process, the first stage being to find a Montgomery-form equivalent to the Edwards point, which is then transformed to a Weierstrass point as described previously. Other methods of transforming from an Edwards curve point to a Weierstrass curve point are possible however, for example a single stage process with a single transformation may be used.

A first point on the Edwards elliptic curve is transformed into a point on a Weierstrass curve in a two stage process. In the first step S701, the point on the Edwards curve is transformed into an equivalent point on the Montgomery curve defined over the finite field $F_p$:

$$Bv^2 = u^3 + Au^2 + u \qquad (25)$$

The pre-computation of the constants A and B defining the Montgomery curve is performed using the following equations:

$$B = \frac{1}{1 - d}$$

$$(26)$$

$$A = 4B - 2$$

$$(27)$$

As has been described previously, these constants may be computed in a pre-computation stage and stored for later use.

The transform of the coordinates x and y of the first point on the Edwards curve to the coordinates u and v of a second point P' on the Montgomery curve is performed in S701 using the following equations:

$$u = \frac{1+y}{1-y}$$

$$(28)$$

$$v = \frac{2u}{x}$$

$$(29)$$

In the second step S702, the point P' on the Montgomery curve is transformed into an equivalent Weierstrass form. The Montgomery curve constants and point co-ordinates are transformed to a Weierstrass form as described previously for processing by the hardware accelerator 15. The point P' on the Montgomery curve is transformed to a point P" on a Weierstrass curve in S702 as has been described previously, and the desired operation is performed in S703, resulting in an output point on the Weierstrass curve S".

The inverse transformation from Weierstrass curve to the Edwards curve is performed in a similar fashion. The Weierstrass curve is first inverse transformed to an equivalent Montgomery curve in S704, and the Montgomery curve is subsequently reverse transformed to Edwards curve S705. The inverse transformation of the point S" on the Weierstrass curve to a point S' on the Montgomery curve is performed in S704 as described previously. The inverse transformation of the point S' on the Montgomery curve is performed in S705 to give the point S on the Edwards curve, using the following equations for the inverse transformation:

$$x = \frac{2u}{v}$$

$$(30)$$

$$y = \frac{u-1}{u+1}$$

$$(31)$$

In the above described methods, a point on an elliptic curve of a first type (for example a Montgomery or Edwards curve) is transformed to a point on a Weierstrass curve. This enables an operation on the point to be performed more efficiently, by using a crypto-coprocessor device 15 which supports operations on a Weierstrass curve. Any type of elliptic curve can be written in Weierstrass form.

However, in some cases, the crypto co-processor 15 may support operations on a curve other than a Weierstrass curve. For example, the crypto co-processor 15 may support operations on a Montgomery curve, but not operations on a Weierstrass curve. In such cases, a point on an elliptic curve of a first type (for example a Weierstrass or Edwards curve) is transformed to a point on a Montgomery curve.

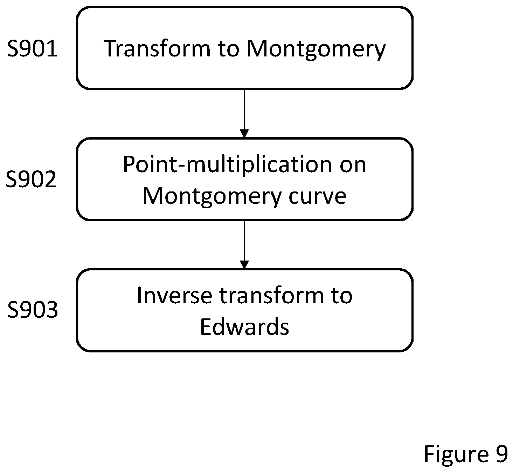

Figure 9 is a flow chart of a method according to an embodiment in which an operation on a first point on an elliptic curve defined using the Edwards equation is to be performed. A first point P on an Edwards elliptic curve is transformed to a second point on a Montgomery curve in S901, using the mappings in Equations (26) to (29) above. The operation, for example a point multiplication, is then performed on the crypto co-processor 15 which supports operations on the Montgomery curve in S902. The resulting point on the Montgomery curve is then transformed to a point on the Edwards curve, using Equations (30) and (31) in S903.

In this method, the result of an operation on a first point P on an Edwards curve is to be performed. The first point corresponds to an x coordinate and a y coordinate. These are also referred to as the first values corresponding to the first point P. The y coordinate is transformed to a u coordinate using Equation (28) above and the x coordinate is transformed to a v coordinate using Equation (29) above in S901. This is the second point P' on the Montgomery curve. A point operation is then performed in S902 using the Montgomery formulae, resulting in a third point S'. The u and v coordinates of the third point S' are then transformed to x and y coordinates of a fourth point S on the Edwards curve using equations (30) and (31) as described above in S903.

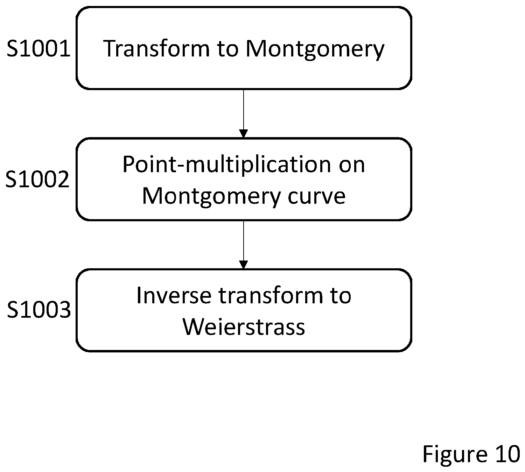

Figure 10 is a flow chart of a method according to an embodiment in which an operation on a first point on an elliptic curve defined using the Weierstrass equation is to be performed, using a crypto co-processor supporting Montgomery operations. Where an operation on a first point P on a Weierstrass curve is to be performed using a crypto co-processor supporting Montgomery operations, the first point on the Weierstrass curve is transformed to a second point P' on a Montgomery curve in S1001. An elliptic curve over the field $F_p$ in Weierstrass form:

$$v^2 = u^3 + au + b \qquad\qquad (32)$$

can only be converted to Montgomery form in certain cases, in particular if equations (15) and (16) above can be solved to find A and B parameters of a Montgomery curve corresponding to the a and b parameters of the given Weierstrass curve.

The first point P on the Weierstrass curve corresponds to a u coordinate and a v coordinate. These are also referred to as the first values corresponding to the first point P.

As a first step, using equations (17) and (18) above, the u and v coordinates are transformed to x and y coordinates of a point on the Montgomery curve:

$$By^2 = x^3 + Ax^2 + x$$

$$(33)$$

The second values corresponding to a second point P' on the Montgomery curve are thus the x and y coordinates.

A point multiplication operation is then performed using the Montgomery formulae in S1002.

The x and y coordinates of the third point S' are then transformed to u and v coordinates of a fourth point S on the Weierstrass curve in S1003.

In the above described method, the u and v coordinates on the Weierstrass curve are transformed to x and y coordinates of a point on a Montgomery curve. However, in some methods, only the u coordinate on the Weierstrass curve is transformed to an x coordinate of a point on the Montgomery curve. An operation is then performed using only the x coordinate. For example, where a Montgomery-form hardware accelerator is configured to implement operations with only an x-coordinate, and where the intended cryptographic application does not use the y value, only the u coordinate on the Weierstrass curve may be transformed to an x coordinate of a point on the Montgomery curve. The x coordinate of the point on the Montgomery curve is then transformed to a u coordinate on the Weierstrass curve - the v coordinate is not determined. For example, an ECDSA signing algorithm calculates a point $(x_1, y_1) = k.G$, where only $x_1$ is used in the algorithm. Another example is Elliptic Curve Integrated Encryption Schemes (ECIES), where only the *x*-coordinate is used to derive an encryption key.

In general, a first value corresponding to a first point on a first elliptic curve of a first type defined on a finite field may be transformed into a second value corresponding to a second point on a second elliptic curve of a second type defined on the finite field in order to perform an operation using the second value.

In Figure 2 above, the crypto co-processor 15 is shown to be in wired bi-directional communication only with the CPU 13. The crypto co-processor 15 accesses the RAM 17 through the CPU 13. However, in an alternative configuration, the crypto co-processor 15 is in wired bi-directional communication with one or more other components of the HSM 11, as well as with the CPU 13. For example, the crypto co-processor 15 may directly read and write to the RAM 17. The CPU 13 may assign memory locations of the RAM 17 for Direct Memory Access (DMA), and the crypto co-processor 15 can access this set of memory access using DMA, independently of the CPU 13. For example, the CPU 17 may store one or more private keys in the RAM 17, and the crypto co-processor 15 may retrieve the private keys directly from the RAM 17, without the involvement of the CPU 13.

In the above described examples, the methods are described as being implemented on the hardware security module 11 shown in Figure 2, which comprises a co-processor 15 comprising an ASIC. However, the co-processor 15 may alternatively comprise a Field Programmable Gate Array (FPGA). For example the hardware coprocessor 15 may comprise an FPGA which has been programmed to implement one or more operations on elliptic curves defined using the Weierstrass equation. The client may wish to perform an operation on a first point on a Montgomery curve using HSM 11 comprising the coprocessor 15 comprising the FPGA. It may not be possible to include on the FPGA a configuration for performing operations on a Montgomery curve in addition to the configuration for performing operations on a Weierstrass curve. For example, the FPGA may be space limited. Furthermore, it may be time consuming to reconfigure the FPGA 15 to perform the operation on the Montgomery curve. In such cases, the above described methods may be used to convert the first point on the Montgomery curve to a second point on the Weierstrass curve, and then implement the operation on the Weierstrass curve using the FPGA that is programmed to perform the operation on the Weierstrass curve. In this manner, reconfiguration of the FPGA may be avoided.

Although examples in which the co-processor 15 comprises an ASIC or an FPGA are described above, it will be understood that the crypto co-processor 15 may comprise any hardware device which is configured to perform one or more operations on an elliptic curve, in other words in which these operations are implemented in hardware.

Figure 11(a) is a schematic illustration of a system according to an embodiment, comprising a computing device 12 and a smart card device 14. The above described methods may alternatively be implemented on the system of Figure 11(a) for example.

The computing device 12 may be a general purpose computer, a mobile device or a server device for example. The computing device comprises a CPU 13, RAM 17, non-volatile storage 19 and a smart card interface 16.

The CPU 13 is in wired bi-directional communication with the non-volatile storage 19. The non-volatile storage 19 may include any form of non-volatile device memory such as flash, optical disks or magnetic hard drives, for example. The CPU 13 is also in wired bi-directional communication with working memory 17, corresponding to Random Access Memory 17. RAM 17 corresponds to operating memory of the CPU 13. The CPU 13 may comprise logic circuitry that responds to and processes the instructions in code in the RAM 17. In particular, when executed, a program is represented as a software product, or process, stored in the RAM 17. Execution of various programs by the CPU 13 will cause methods as have been described herein to be implemented.

The smart card interface 16 comprises connector contacts for example, which connect to corresponding contacts on the smart card 16. Data may be transferred from the CPU 13 to the smart card 14 and from the smart card 14 to the CPU 13 through the interface 16, when the smart card 14 is connected to the interface 16.

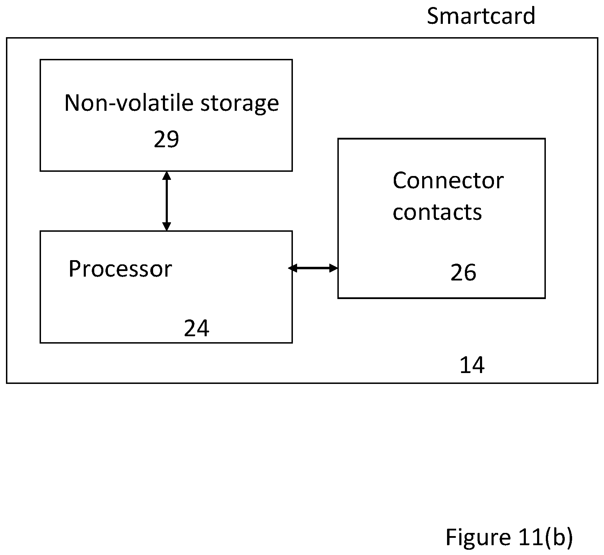

Figure 11(b) is a schematic illustration of an example smartcard device 14 which may be included in the system of Figure 11(a). The smart card device 14 comprises non-volatile or persistent storage 29. The storage 29 stores information, such as cryptographic keys. The non-volatile storage 29 may include any form of non-volatile device memory such as flash, optical disks or magnetic hard drives for example. The processor 24 comprises fixed circuitry. The processor 24 contains the logic for terminating one end of the communication channel with the computing device 12.

The processor 24 further comprises fixed circuitry configured to perform an operation, such as a point addition, point doubling and/or point multiplication operation, based on one or more elliptic curves. For example, the processor 24 comprises fixed circuitry configured to perform a point addition, point doubling and/or point multiplication operation based on a Weierstrass elliptic curve.

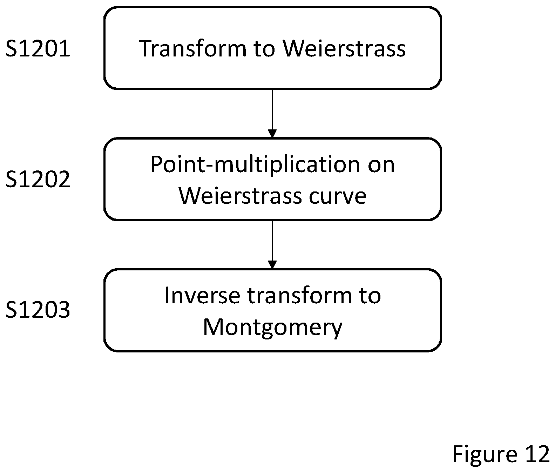

The methods described above may alternatively be implemented using the system of Figure 11(a). Figure 12 is a schematic illustration of a method which is implemented on the system of Figure 11(a) in accordance with an embodiment. In this process, for the Montgomery curve in Equation (11) described by values A, B and p, it is desired to perform a point multiplication operation k.P for a point P on the Montgomery curve. In order to efficiently perform the operation using the smart card 14, which is configured to perform a point multiplication operation for a point on a Weierstrass curve, the point P on the Montgomery curve is transformed to a point P' on a Weierstrass curve using a mapping, and the point multiplication operation k.P' is performed on the smart card 14. The output point S' on the Weierstrass curve is then transformed back to a point S on the Montgomery curve. The point S corresponds to k.P.

In step S1201, first values corresponding to a first point P on the Montgomery curve in Equation (11) are transformed to second values corresponding to a second point P' on a Weierstrass elliptic curve as defined in Equation (12). The determination of the second values $u_{P'}$ and $v_{P'}$ from the first values $x_P$ and $y_P$ using the mappings in Equations (13) and (14) may be performed on the CPU 13 of the computing device 12.

In step S1202, the point multiplication operation k.P' is performed, using the second point P' on the Weierstrass curve. The point multiplication operation is performed on the smart card 14. The coordinates of the point P' are provided to the smart card 14, together with the a and b values and the prime number p describing the Weierstrass curve, from the CPU 13.

The integer value k, which may correspond to the user private key, is stored in the non-volatile storage 29 on the smart card 14.

The smart card processor 24 performs the point multiplication operation k.P' on the Weierstrass curve, and provides an output to the CPU 13 through the connector contacts 26 and the interface 16. The output is the coordinates of a third point S', which is a point on the Weierstrass curve. The coordinates of the third point are $u_{S'}$ and $v_{S'}$. These are also referred to as the third values.

In step S1203, the third values are transformed to fourth values $x_S$ and $y_S$ corresponding to a fourth point on the Montgomery curve. This comprises performing the inverse transformation $\psi^{-1}$ of the third point S' on the Weierstrass curve to a fourth point S on the Montgomery curve. The determination of the fourth values $x_s$ and $y_s$ from the third values $u_s$, and $v_s$, using the mappings in Equations (17) and (18) may be performed on the CPU 13 of the computing device 12.

Although the above described methods are described as being implemented on the HSM 11 described in relation to Figure 2 or on the system described in relation to Figure 11(a), it will be understood that the methods may be implemented on various other systems comprising various other devices.

Furthermore, in the above described methods, a first processor module comprises a hardware device such as a crypto co-processor or a smart card which is configured to implement various operations, such as a point-multiplication, on elliptic curves of a second type, for example Weierstrass curves. Operations on unsupported curves of a first type may still be efficiently performed by the hardware device, by first mapping a point on the unsupported curve to a point on a supported elliptic curve. The first processor module supports the first operation on an elliptic curve of a second type, but does not support operations on an elliptic curve of a first type. The mapping is performed so that an operation on an elliptic curve of a first type can still be performed using the specific hardware device.

In some cases however, the first processor module comprises a general hardware device, which is able to perform the operations on elliptic curves of both the first type and the second type. However, there may be a software implementation of the first operation on an elliptic curve of the second type having some desired property. For example, the software implementation may be efficient or resistant to attack. It may be difficult to alter the software implementation so as to perform an operation on an elliptic curve of the first type, whilst retaining this property. In such cases, the mapping can be performed so that an operation on an elliptic curve of a first type can still be performed using the software implementation. The first processor module comprises a general hardware device, for example a CPU, which executes a software implementation of a first operation on an elliptic curve of a second type. The first processor module, for example a CPU, supports the first operation on an elliptic curve of the second type, but also supports operations on an elliptic curve of the first type. However, the mapping is performed so that a specific software implementation of the first operation on an elliptic curve of the second type may be used, for example because the software implementation is particularly efficient or secure.

Although the above described examples use elliptic curves which are defined over a prime field, the methods may also use elliptic curves defined over a finite binary field, where a mapping from one form of elliptic curve defined over a finite binary field to another form of elliptic curve defined over the finite binary field is used.

As has been described above, devices such as a crypto co-processor or a smart card may be configured to implement various operations, such as a point-multiplication, on various standard elliptic curves of one or more types, such as one or more standard Weierstrass curves. The crypto co-processor and smart card devices are described here as examples, but various other devices which are configured to implement such operations in hardware may be used. Such devices may not support all elliptic curve types. The device either cannot perform operations on such curves, or the operation would need to be performed in separate stages, by passing each component operation to the device separately. Such operations therefore do not benefit or receive limited benefit from the hardware implementation, and therefore the speed of processing of the operation is reduced. In the above described methods, operations on unsupported curves may still be efficiently performed by the hardware implementation, by first mapping a point on the unsupported curve to a point on a supported elliptic curve.

For example, elliptic curve cryptosystems using the 'Edwards' or 'Montgomery' equations include X25519 and Ed25519. These are not supported by many ECC hardware acceleration ASIC devices. Various X25519 and Ed25519 algorithms may be performed using software or firmware implementations. The above described methods may improve performance of ECC for 'Edwards' and 'Montgomery' type curves for example, using hardware devices which don't directly support these curves. A hybrid approach using steps implemented on software (or firmware) together with steps implemented on the hardware accelerator device is used. This allows for performance of ECC using Edwards or Montgomery curves for example at higher speed, using a hardware accelerator, by converting data values to Weierstrass-form equivalents, and back again. In this way, a high-speed but fixed functionality hardware coprocessor can be used to perform a wider functionality. In particular, an ASIC comprising fixed logic circuitry configured to receive as input one or more points on a Weierstrass elliptic curve and output the result of an operation implemented directly in hardware may be used to perform an operation on an unsupported Montgomery curve. This may result in an increased speed of operation compared to implementing the operation on software (or firmware) alone. For example, X25519 or Ed25519 crypto algorithms may be performed with increased speed on an HSM device.

Figure 14 is a flow chart showing a method according to another embodiment.

Points on an elliptic curve form a mathematical group, which means there must be a point within the group which acts as the identity element. The identity element of a mathematical group is equivalent to zero in ordinary arithmetic, in that $(m + 0) = (0 + m) = m$, for any number m. In the same manner, "adding" any curve point to the identity element, by performing a point addition operation, will output the same point as the result.

For Montgomery and Weierstrass form curves, there is no (x, y) value which acts as the identity element, in other words that causes the point-addition formula to give the same output as the input. In particular, the value (0, 0) is not the identity element - in fact, the point (0, 0) is not on a Weierstrass curve where the parameter b is non-zero. Instead, for Montgomery and Weierstrass curves, there is an additional point called the "point at infinity", denoted here as $\Omega$, which is defined as the identity element. The point addition operation is defined such that:

$$\Omega + (x, y) = (x, y) + \Omega = (x, y)$$

$$(34)$$

where $(x, y)$ is a point on a Weierstrass elliptic curve or a Montgomery elliptic curve. Performing point addition of point $(x, y)$ and its "inverse" point $(x, -y)$ will also result in the 'point at infinity':

$$(x, y) + (x, -y) = \Omega$$

$$(35)$$

Given these values as input, the standard point-addition formulae for both Montgomery and Weierstrass curve forms will involve a division-by-zero. A computer implementation of elliptic-curve arithmetic therefore handles these cases explicitly. In one example, the implementation will store x and y co-ordinates for each point, plus a flag bit to indicate whether the point is $\Omega$. The x and y co-ordinates of the point are ignored if the flag is set. The mapping of the 'point at infinity' is also a special case that is identified and handled explicitly in the transformations.

In particular, when a point on a Montgomery curve is to be transformed to a point on a Weierstrass curve, a first step of checking whether this input point is the point-at-infinity on the Montgomery curve is performed. In the example above, this comprises checking if the flag is set. If the input point is the point-at-infinity on the Montgomery curve, this is then mapped to the point at infinity on the Weierstrass curve. In the example above, this comprises setting the flag bit for the stored value corresponding to the converted point. Any value may be set for the x and y co-ordinates of the converted point - for example, the x and y co-ordinates may be set to (0, 0). In some implementations, if the input point is the point-at-infinity on the Montgomery curve, no modification is made to the x and y values or the flag when transforming to a Weierstrass curve.

Likewise, when a point on a Weierstrass curve is to be transformed to a point on a Montgomery curve, a first step of checking whether this input point is the point-at-infinity is also performed. In the example above, this comprises checking if the flag is set. If the input point is the point-at-infinity on the Weierstrass curve, this is then mapped to the point at infinity on the Montgomery curve. In the example above, this comprises setting the flag bit for the stored value corresponding to the converted point. Any value may again be set for the x and y co-ordinates - for example, no modification is made to the x and y values.

The method of Figure 14 is implemented on the device 11 of Figure 2. This method may be performed as part of a cryptographic algorithm. In this method, for a specific Montgomery curve $M_1$ described by values A, B and p, it is desired to perform a point addition operation for a first point P and a third point Q on the curve. However, the crypto co-processor 15 is specifically configured to perform a point addition operation for a Weierstrass curve. In order to efficiently perform the desired operation using the crypto co-processor 15, the points on the Montgomery curve are transformed to points on a Weierstrass curve using a mapping, and the point addition operation is performed using the points on the Weierstrass curve. The output point on the Weierstrass curve which results from the point addition operation is then transformed back to a point on the Montgomery curve.

In step S1403, first values corresponding to the first point P on the Montgomery elliptic curve $M_1$ defined on the finite field $F_p$ are transformed to second values corresponding to a second point P' on a Weierstrass elliptic curve $W_1$ defined on the finite field $F_p$. Third values corresponding to a third point Q on the Montgomery elliptic curve $M_1$ are transformed to fourth values corresponding to a fourth point Q' on the Weierstrass elliptic curve $W_1$. Step 1403 comprises a step of checking whether either of the first point P or the third point Q are the point at infinity. In the example above, this comprises checking if the flag is set.

If the first point P is not the point-at-infinity on the Montgomery curve, the first values $x_P$ and $y_P$ are transformed to second values $u_{P'}$ and $v_{P'}$, using Equations (13) and (14) as has been described previously. Similarly, if the third point Q is not the point-at-infinity on the Montgomery curve, the third values $x_Q$ and $y_Q$ are transformed to fourth values $u_{Q'}$ and $v_{Q'}$, using Equations (13) and (14) as has been described previously.

If the first point P is the point-at-infinity on the Montgomery curve, this is then mapped to the point at infinity on the Weierstrass curve. For example, the first point may be represented by an x value of 0, a y value of 0, and the flag being set. In this case, the second point P' is generated having an x value of 0, a y value of 0, and the flag being set. In practice, this may involve simply performing no conversion. If the third point Q is the point-at-infinity on the Montgomery curve, this is then mapped to the point at infinity on the Weierstrass curve in the same manner.

In step S1405, the point addition operation P' + Q' is performed, using the second point P' and the fourth point Q'. The point addition operation is performed on the crypto co-processor 15. The implementation of the point addition operation on the crypto co-processor handles the cases described in relation to Equation (34) and (35) above explicitly. For example, if the point Q corresponds to $(u_{Q'}, -v_{P'})$, the output of the point addition operation will be the point at infinity on the Weierstrass curve. In this example, the implementation will store u and v co-ordinates for the output point as (0, 0), plus a flag bit to indicate that the point is the point at infinity. However, other representations of the point-at-infinity could be used.

In step S1407, the inverse transformation of the output point on the Weierstrass curve to a point on the Montgomery curve is performed. Step 1407 comprises checking whether the output point is the point at infinity. In the example above, this comprises checking if the flag is set. If the output point is not the point-at-infinity on the Weierstrass curve, the u and v values are transformed to x and y values, using the transforms in Equations (17) and (18) as has been described previously. If the output point is the point-at-infinity on the Weierstrass curve, this is then mapped to the point at infinity on the Montgomery curve. In this example, the output point would then be represented by an x value of 0, a y value of 0, and the flag being set.

The identity element occurs in various cryptographic applications, for example when checking the validity of an EC Diffie-Hellman public key. For example, an operation which is performed as part of various elliptic curve algorithms is to verify that a received point Q is a point on the specified curve. This involves checking that $n.Q = \Omega$ (the point at infinity). As described above, n is the group order of the specified elliptic curve, and may be specified in a standard which defines the curve for example. For example, the operation $n.Q$ may be performed by transforming the point Q (which is a point on a first elliptic curve of a Montgomery type) to a second point on a second elliptic curve of a Weierstrass type and performing the operation using the second point. In this case, where the output of the operation is the point at infinity on the Weierstrass curve (which is the expected outcome where the point Q is a point on the first curve), the step of transforming the output value to a point on the first elliptic curve comprises transforming the output value to the point at infinity on the Montgomery curve.

Figure 13 is a flow chart of a method according to another embodiment, in which an operation on a first point on an elliptic curve defined using the twisted Edwards curve equation is performed.

For the Edwards curve defined by Equation (24), for some fixed d, where d is not 0 or 1, and where all arithmetic is performed modulo p, there is an equivalent Montgomery curve given by Equation (25), where B, A, u and v are given by Equations (26) to (29). The Montgomery curve constants and point co-ordinates can then be transformed to a Weierstrass form as described previously. These can then be processed by a hardware accelerator 15 for example to perform operations on the points. The inverse transformation is given by Equations (30) and (31). The Edwards curve defined by Equation (24) is also referred to as a Standard Edwards curve.

Twisted Edwards curves have an additional defining parameter a, and are defined by the curve equation:

$$ax^2 + y^2 = 1 + dx^2y^2$$

$$(36)$$

where $d$ is a constant, having a value different than 0 and 1. $a$ is also a constant. The calculations are performed modulo $p$.

An elliptic curve defined using Equation (36) is also referred to herein as a twisted Edwards type curve or just a twisted Edwards curve. The twisted Edwards elliptic curve comprises the set of points $(x,y)$ satisfying the Equation (36) defined over a finite field $F_p$, together with the identity element (0, 1). The values of x, y, a and d belong to $F_p$. Twisted Edwards curves are described in 'Twisted Edwards Curves', Bernstein et al., published 13 March 2008, Progress in Cryptology - AFRICACRYPT 2008. Lecture Notes in Computer Science. Berlin, Heidelberg: Springer: 389-405, the entire contents of which are incorporated by reference herein.

A transformation allows points on a twisted Edwards curve to be transformed into their equivalents on a Weierstrass curve. In the example described herein, the transformation is performed in a two-stage process, the first stage being to find a Montgomery-form equivalent to the twisted Edwards point, which is then transformed to a Weierstrass point as described previously. Other methods of transforming from a twisted Edwards curve point to a Weierstrass curve point are possible however, for example a single stage process with a single transformation may be used.

A first point on the twisted Edwards elliptic curve is transformed into a point on a Weierstrass curve in a two stage process. In the first step S1301, the point on the Edwards curve is transformed into an equivalent point on the Montgomery curve defined using Equation (25). The pre-computation of the constants A and B defining the Montgomery curve is performed using the following equations:

$$A = \frac{2(a + d)}{a - d}$$

$$(37)$$

$$B = \frac{4}{(a - d)}$$

$$(38)$$

In other words, the equivalent Montgomery curve coefficients A and B are given by Equations (37) and (38). As has been described previously, these constants may be computed in a pre-computation stage and stored for later use.

The transform of the coordinates x and y of the first point on the twisted Edwards curve to the coordinates u and v of a second point P' on the Montgomery curve is performed in S1301 using the following equations:

$$u = \frac{1+y}{1-y}$$

$$(39)$$

$$v = \frac{u}{x}$$

$$(40)$$

In other words, points (x, y) are mapped onto the Montgomery curve points (u, v) using the Equations (39) and (40).

In the second step S1302, the point P' on the Montgomery curve is transformed into an equivalent Weierstrass form as described previously. The desired operation is then performed in S1303, resulting in an output point on the Weierstrass curve S".

The Weierstrass curve point is first inverse transformed to an equivalent Montgomery curve point in S1304, and the Montgomery curve point is subsequently transformed to a twisted Edwards curve point in S1305. The inverse transformation of the point S" on the Weierstrass curve to a point S' on the Montgomery curve is performed in S1304 as described previously. The inverse transformation of the point S' on the Montgomery curve is performed in S1305 to give the point S on the twisted Edwards curve, using the following equations for the inverse transformation:

$$x = \frac{u}{v}$$

$$(41)$$

$$y = \frac{u-1}{u+1}$$

$$(42)$$

Figure 15 is a flow chart showing a method according to another embodiment.

For certain points, the transformation of a point on a standard or twisted Edwards type elliptic curve into an equivalent point on a Montgomery type elliptic curve, or the inverse transformation of a point on the Montgomery type elliptic curve into an equivalent point on the standard or twisted Edwards type elliptic curve, involves a division by zero. In particular, the Equations (28) to (31) and (39) to (42) each involve division. In cryptographic applications, arithmetic may be performed modulo a prime, p. Here, calculating a "division" a/b comprises calculating the "modular inverse" of b with respect to p, written $b^{-1} \bmod p$, and then multiplying by a to give $a.b^{-1} \bmod p$. However, division by zero cannot be performed. When b=0, the modular inverse $b^{-1} \bmod p$ does not exist for any p, and so the calculation cannot be completed. An operation involving "division by zero" therefore receives special handling. Such operations occur for the following points: Standard or twisted Edwards curve points where y = 1; Standard or twisted Edwards curve points where x = 0; Montgomery curve points where v = 0; and Montgomery curve points where u = -1. The handling of these operations will be described in more detail below.

• Standard or twisted Edwards curve points where y = 1

On a standard or a twisted Edwards elliptic curve, the point (0, 1) is the only valid point with a y co-ordinate value equal to 1. If a transformation of a point (for example a point on a Montgomery curve) to a standard or a twisted Edwards curve results in a point having a y co-ordinate value equal to 1 and an x coordinate value different than 0, the transformation raises an error indicating an invalid input. For standard and twisted Edwards curves, the point (0, 1) is the identity element. Every standard and twisted Edwards curve comprises this point. There is no 'point at infinity' on standard and twisted Edwards curves - for this reason, such curves are sometimes preferred. The ordinary point-addition formula for a point (x, y) on a standard or twisted Edwards curve with the identity element will give:

$$(0,1) + (x,y) = (x,y) + (0,1) = (x,y)$$

$$(43)$$

When a point on a standard or twisted Edwards curve is to be transformed to a point on a Montgomery curve, a step of checking whether the point is (0, 1) is performed. If the input point is (0, 1), this is then mapped to the point at infinity on the Montgomery curve. In the example above, this comprises setting the flag bit, where any value may be set for the x and y co-ordinates. It is also noted that when a point on a Montgomery curve is to be transformed to a point on a standard or twisted Edwards curve, a step of checking whether this point is the point-at-infinity is performed. In the example above, this comprises checking if the flag is set. If the point is the point-at-infinity, this is then mapped to the point (0, 1) on the standard or twisted Edwards curve.

• Standard or twisted Edwards curve points where x = 0

The only valid points on a standard or a twisted Edwards elliptic curve having x coordinate value equal to 0 are the points with coordinates (0, 1) and (0, -1). As mentioned above, the point on Edwards curve with coordinates (0, 1) is the identity element. The point on the Edwards curve with coordinates (0, -1) is equivalent to the point (0, 0) on the Montgomery curve. When a point on a standard or twisted Edwards curve is to be transformed to a point on a Montgomery curve, a step of checking whether the point is (0, -1) is performed. In one example, if the input point is (0, -1), this is then mapped to the point (0, 0) on the Montgomery curve. However, the point (0, -1) on a standard or twisted Edwards curve is not returned in 'normal' situations, because it is in a separate mathematical group to the group of points used in cryptographic applications. In particular, the Edwards points (0, -1) and (0, 1) form their own 2-element group, equivalent to (0, 0) and $\Omega$, respectively, on a Montgomery curve. In cryptographic applications, the point (0, -1) would only be encountered if invalid input data has been received. In some other examples therefore, an error is raised if the point (0, -1) on a standard or twisted Edwards curve is to be transformed to a point on a Montgomery curve.

• Montgomery curve points where v = 0

As discussed above, the (0, 0) point on a Montgomery type curve is equivalent to the point (0, -1) on the Edwards type elliptic curve. When a point on a Montgomery curve is to be transformed to a point on a standard or twisted Edwards curve, a step of checking whether the point is (0, 0) is performed. In some implementations, the transformation may then be performed by mapping the (0, 0) point on the Montgomery curve to the point (0, -1) on the Edwards curve. However, in other implementations an encounter of the (0, 0) point on the Montgomery curve may raise an error. For some Montgomery type curves, there also exist two additional points which comprise a v value equal to 0, in other words two additional solutions to the Equation 44:

$$u^3 + Au^2 + u = 0$$

(44)

The two additional points occur for Montgomery curves for which the condition that $(A + 2)(A - 2)$ is a square is satisfied, as described in 'Twisted Edwards Curves', Bernstein et al., published 13 March 2008, Progress in Cryptology - AFRICACRYPT 2008. Lecture Notes in Computer Science. Berlin, Heidelberg: Springer: 389-405, the entire contents of which are incorporated by reference herein. The points have coordinates ( $\frac{-A \pm \sqrt{(A+2)(A-2)}}{2}, 0$ ). In cryptographic applications these points are not returned in 'normal' situations, because they are in a separate mathematical group to the group of points used in cryptographic applications, and cannot be reached by calculations using points outside their group. For cryptographic applications, an error is raised if these points are encountered, as it suggests that invalid input data has been received.

• Montgomery curve points where u = -1

Points where u = -1 only exist for some A and B values where the Montgomery curve equation can be solved. In other words, for some Montgomery curves, there may exist two points for which the curve equation can be solved for u = -1. These two points exist for Montgomery curves for which the condition $\frac{(A-2)}{B}$ is a square is satisfied, as described in 'Twisted Edwards Curves', Bernstein et al., published 13 March 2008, Progress in Cryptology - AFRICACRYPT 2008. Lecture Notes in Computer Science. Berlin, Heidelberg: Springer: 389-405, the entire contents of which are incorporated by reference herein. The two points are ( $-1, \pm\sqrt{\frac{(A-2)}{B}}$ ). In cryptographic applications these points are not returned in 'normal' situations, because they are in a separate mathematical group to the group of points used in cryptographic applications, and cannot be reached by calculations using points outside their group. For cryptographic applications, an error is raised if these points are encountered, as it suggests that invalid input data has been received.

The method of Figure 15 is implemented on the device 11 of Figure 2. The method may be performed as part of a cryptographic algorithm. In the method of Figure 15, for a specific standard Edwards or twisted Edwards curve, it is desired to perform a point-addition operation for a first point P and a fourth point Q on the curve. However, the crypto co-processor 15 is configured to perform point addition for a Weierstrass curve. In order to efficiently perform the desired operation using the crypto co-processor 15, the points on the standard Edwards or twisted Edwards curve are transformed to points on a Weierstrass curve using a mapping, and the point addition operation is performed using the points on the Weierstrass curve. The output point on the Weierstrass curve is then transformed back to a point on the standard Edwards or twisted Edwards curve. In the example described here, the transformation is performed in a two-stage process, the first stage being to find a Montgomery-form equivalent to the Edwards point, which is then transformed to a Weierstrass point as described previously. Other methods of transforming from an Edwards curve point to a Weierstrass curve point are possible however.

In Step S1501, first values corresponding to a first point P on a first curve, which is a standard Edwards or twisted Edwards curve $E_1$ defined on a finite field $F_P$, are transformed to second values corresponding to a second point P' on a Montgomery curve $M_1$ defined on the finite field $F_P$. Fourth values corresponding to a fourth point Q on the first curve are transformed to fifth values corresponding to a fifth point Q' on the Montgomery curve. Step 1501 comprises performing the process set out in Figure 16 for each of points P and Q. An input point (x, y) is received in S1701. This point may be P or Q in this example. In Step S1702, it is checked if the point comprises an x coordinate value equal to 0. If the point does comprise an x coordinate value equal to 0, in step 1704, it is checked if the y coordinate value is equal to 1. In the case the y coordinate value is equal to 1, the point is mapped to the point-at-infinity $\Omega$ of the Montgomery curve in step 1705. For example, the point may be represented by a v value of 0, a u value of 1, and the flag being set. If in Step 1704, it is determined that the y coordinate value is not equal to 1, an 'invalid input' error is raised in Step 1706 in this example. If the point does not comprise an x coordinate value equal to zero, in S1703 it is determined where the y coordinate is equal to 1. If the y coordinate is equal to 1, an 'invalid input' error is raised in Step 1706. If the point does not comprise a y coordinate equal to 1, the values x and y are transformed to values u and v corresponding to a point on a Montgomery curve using Equations (28) and (29) as has been described previously, in Step 1707.

In Step 1502, the second values corresponding to the second point P' on the Montgomery curve are transformed to third values corresponding to a third point P" on a Weierstrass curve. Fifth values corresponding to the fifth point Q' on the Montgomery curve are transformed to sixth values corresponding to a sixth point Q" on the Weierstrass curve. The Montgomery curve constants and point co-ordinates are transformed to a Weierstrass form as described previously. As described previously, if the point-at-infinity $\Omega$ on the Montgomery curve is encountered, this is then mapped to the point-at-infinity $\Omega$ on the Weierstrass curve. Alternatively, if it is determined in Step 1704 that a point on the standard Edwards or twisted Edwards curve is the point with coordinate values (0, 1), the point is directly mapped to the point-at-infinity $\Omega$ of the Weierstrass curve. The desired operation is then performed in S1503, resulting in an output point on the Weierstrass curve S".

In Step 1504, the inverse transform of the output point S" on the Weierstrass curve to a point S' on the Montgomery curve is performed as described previously. The Step 1504 comprises the step of checking whether the output point on the Weierstrass curve is the point-at-infinity $\Omega$, as described previously. If the output point S" is the point-at-infinity $\Omega$ on the Weierstrass curve, the output point S" is then mapped to the point at infinity on the Montgomery curve. Alternatively, the output point S" on the Weierstrass curve may be directly mapped to the identity element (0, 1) on the standard Edwards or Twisted Edwards curve in this step, in which case steps S1802 and S1803 described below may be skipped.

In Step 1505 the point S' is inverse transformed to a point on the standard Edwards or twisted Edwards curve. Step 1505 comprises performing the process set out in Figure 17 for points S'. An input point (u, v) on a Montgomery curve is received in S1801. In Step S1802, it is checked if the point is the point at infinity $\Omega$ on the Montgomery curve. In the example above, this comprises checking if the flag is set. If the point is the point at infinity, it is then mapped to the identity element (0, 1) on the standard Edwards or twisted Edwards curve, in Step S1803. If it is determined that the point is not the point at infinity $\Omega$, in Step S1804, it is checked whether the v value is zero. If so, a corresponding 'invalid input' error is raised, in Step S1807. If not, it is checked whether the u is equal to -1, in Step S1805. If it is determined that the point has a u value of -1, an error is raised, in Step S1807. However, if it is determined that the point does not have a u value equal to -1, the u and v values are transformed to their equivalent x and y values corresponding to an output point S on the standard Edwards or twisted Edwards curve in step S1806, using Equations (30) and (31) as has been described previously.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

**Claims**

1. A computer implemented method of performing an operation, the method comprising:

   for a first value corresponding to a first point on a first elliptic curve of a first type defined on a finite field, obtaining a second value corresponding to a second point on a second elliptic curve of a second type defined on the finite field; performing a first operation using the second value to determine a third value corresponding to a third point on the second elliptic curve, wherein the first operation is performed on a first processor module (13) which supports the first operation on an elliptic curve of the second type; and

   transforming the third value to a fourth value corresponding to a fourth point on the first elliptic curve, wherein the fourth point on the first elliptic curve is equivalent to a point obtained by performing the first operation on the first point on the first elliptic curve.

2. The method according to claim 1, wherein the first operation is a point multiplication operation, a point addition operation, a point doubling operation or a combination of one or more of these operations.

3. The method according to any preceding claim, wherein the first type is an elliptic curve defined using parameters of a Montgomery equation or an Edwards equation, and wherein the second type is an elliptic curve defined using parameters of a Weierstrass equation.

4. The method according to any preceding claim, wherein obtaining the second value comprises transforming the first value to the second value.

5. The method according to claim 4, wherein transforming the first value to the second value comprises retrieving one or more constants defining the second elliptic curve.

6. The method according to claim 4 or 5, further comprising:
   determining a further first value from the first value, the further first value corresponding to the first point, and transforming the further first value to a further second value corresponding to the second point, wherein the first operation is performed using the second value and the further second value.

7. The method according any of claims 1 to 3, wherein obtaining the second value comprises:

   determining whether the first point corresponds to a pre-defined point;
   responsive to determining that the first point corresponds to the pre-defined point, retrieving the second value.

8. The method according to any preceding claim, wherein transforming the third value to the fourth value is performed at least in part on a second processor module.

9. A system comprising:
   a first processor module (13) which supports a first operation on a elliptic curve of a second type, the system configured to:

   for a first value corresponding to a first point on a first elliptic curve of a first type defined on a finite field, obtaining a second value corresponding to a second point on a second elliptic curve of the second type defined on the finite field;
   performing, on the first processor module, a first operation using the second value to determine a third value corresponding to a third point on the second elliptic curve; and
   transforming the third value to a fourth value corresponding to a fourth point on the first elliptic curve, wherein the fourth point on the first elliptic curve is equivalent to a point obtained by performing the first operation on the first point on the first elliptic curve.

10. The system according to claim 9, wherein transforming the third value to the fourth value is performed at least in part on a second processor module.

11. The system according to claim 9 or 10, wherein the second processor module is a general processor module within a hardware security module device and wherein the first processor module is a hardware coprocessor within the hardware security module device.

12. The system according to any of claims 9 to 11, wherein the second processor module is a general processor module within a first computing device and the first processor module is within a smartcard device.

13. The system according to any of claims 9 to 12, further comprising:

   a memory storing one or more constants defining the second elliptic curve,
   wherein the memory further stores the second value.

14. A carrier medium comprising computer readable code configured to cause a computer to perform the method any of claims 1 to 8.


**Patentansprüche**

1. Computerimplementiertes Verfahren zum Durchführen einer Operation, wobei das Verfahren umfasst:

   für einen ersten Wert, der einem ersten Punkt auf einer ersten elliptischen Kurve eines ersten Typs, die auf einem endlichen Körper definiert ist, entspricht, Erhalten eines zweiten Werts, der einem zweiten Punkt auf einer zweiten elliptischen Kurve eines zweiten Typs, die auf dem endlichen Körper definiert ist, entspricht;
   Durchführen einer ersten Operation unter Verwendung des zweiten Werts, um einen dritten Wert zu bestimmen, der einem dritten Punkt auf der zweiten elliptischen Kurve entspricht, wobei die erste Operation auf einem ersten Prozessormodul (13) durchgeführt wird, das die erste Operation auf einer elliptischen Kurve des zweiten Typs unterstützt; und
   Umwandeln des dritten Werts in einen vierten Wert, der einem vierten Punkt auf der ersten elliptischen Kurve entspricht, wobei dervierte Punkt auf der ersten elliptischen Kurve äquivalent zu einem Punkt ist, der durch Durchführen der ersten Operation auf dem ersten Punkt auf der ersten elliptischen Kurve erhalten wird.

2. Verfahren nach Anspruch 1, wobei es sich bei der ersten Operation um eine Punktmultiplikationsoperation, eine Punktadditionsoperation, eine Punktverdopplungsoperation oder eine Kombination aus einer oder mehrerer dieser Operationen handelt.

3. Verfahren nach einem vorstehenden Anspruch, wobei der erste Typ eine elliptische Kurve ist, die unter Verwendung von Parametern einer Montgomery-Gleichung oder einer Edwards-Gleichung definiert ist, und wobei der zweite Typ eine elliptische Kurve ist, die unter Verwendung von Parametern einer Weierstraß-Gleichung definiert ist.

4. Verfahren nach einem vorstehenden Anspruch, wobei Erhalten des zweiten Wertes das Umwandeln des ersten Wertes in den zweiten Wert umfasst.

5. Verfahren nach Anspruch 4, wobei Umwandeln des ersten Wertes in den zweiten Wert das Abrufen einer oder mehrerer Konstanten umfasst, die die zweite elliptische Kurve definieren.

6. Verfahren nach Anspruch 4 oder 5, weiter umfassend:
   Bestimmen eines weiteren ersten Werts aus dem ersten Wert, wobei der weitere erste Wert dem ersten Punkt entspricht, und Umwandeln des weiteren ersten Werts in einen weiteren zweiten Wert, der dem zweiten Punkt entspricht, wobei die erste Operation unter Verwendung des zweiten Werts und des weiteren zweiten Werts durchgeführt wird.

7. Verfahren nach einem der Ansprüche 1 bis 3, wobei Erhalten des zweiten Werts umfasst:

   Bestimmen, ob der erste Punkt einem vordefinierten Punkt entspricht;
   in Reaktion auf die Bestimmung, dass der erste Punkt dem vordefinierten Punkt entspricht, Abrufen des zweiten Werts.

8. Verfahren nach einem vorstehenden Anspruch, wobei Umwandeln des dritten Werts in den vierten Wert mindestens teilweise auf einem zweiten Prozessormodul durchgeführt wird.

9. System umfassend:
   ein erstes Prozessormodul (13), das eine erste Operation auf einer elliptischen Kurve eines zweiten Typs unterstützt, wobei das System für Folgendes konfiguriert ist:

für einen ersten Wert, der einem ersten Punkt auf einer ersten elliptischen Kurve eines ersten Typs, die auf einem endlichen Körper definiert ist, entspricht, Erhalten eines zweiten Werts, der einem zweiten Punkt auf einer zweiten elliptischen Kurve des zweiten Typs, die auf dem endlichen Körper definiert ist, entspricht; Durchführen einer ersten Operation auf dem ersten Prozessormodul unter Verwendung des zweiten Werts, um einen dritten Wert zu bestimmen, der einem dritten Punkt auf der zweiten elliptischen Kurve entspricht; und Umwandeln des dritten Werts in einen vierten Wert, der einem vierten Punkt auf der ersten elliptischen Kurve entspricht, wobei der vierte Punkt auf der ersten elliptischen Kurve äquivalent zu einem Punkt ist, der durch Durchführen der ersten Operation auf dem ersten Punkt auf der ersten elliptischen Kurve erhalten wird.

10. System nach Anspruch 9, wobei Umwandeln des dritten Werts in den vierten Wert mindestens teilweise auf einem zweiten Prozessormodul durchgeführt wird.

11. System nach Anspruch 9 oder 10, wobei das zweite Prozessormodul ein allgemeines Prozessormodul innerhalb einer Hardware-Sicherheitsmodul-Vorrichtung ist und wobei das erste Prozessormodul ein Hardware-Coprozessor innerhalb der Hardware-Sicherheitsmodul-Vorrichtung ist.

12. System nach einem der Ansprüche 9 bis 11, wobei das zweite Prozessormodul ein allgemeines Prozessormodul innerhalb einer ersten Computervorrichtung ist und das erste Prozessormodul innerhalb einer Smartcard-Vorrichtung ist.

13. System nach einem der Ansprüche 9 bis 12, weiter umfassend:

einen Speicher, der eine oder mehrere Konstanten speichert, die die zweite elliptische Kurve definieren, wobei der Speicher weiter den zweiten Wert speichert.

14. Trägermedium, umfassend computerlesbaren Code, der konfiguriert ist, einen Computer zu veranlassen, das Verfahren nach einem der Ansprüche 1 bis 8 durchzuführen.

## Revendications

1. Procédé mis en œuvre par ordinateur d'exécution d'une opération, le procédé comprenant :

pour une première valeur correspondant à un premier point sur une première courbe elliptique d'un premier type définie sur un corps fini, l'obtention d'une deuxième valeur correspondant à un deuxième point sur une seconde courbe elliptique d'un second type définie sur le corps fini ; la réalisation d'une première opération à l'aide de la deuxième valeur pour déterminer une troisième valeur correspondant à un troisième point sur la seconde courbe elliptique, dans lequel la première opération est effectuée sur un premier module de processeur (13) qui prend en charge la première opération sur une courbe elliptique du second type ; et la transformation de la troisième valeur en une quatrième valeur correspondant à un quatrième point sur la première courbe elliptique, dans lequel le quatrième point sur la première courbe elliptique est équivalent à un point obtenu en effectuant la première opération sur le premier point sur la première courbe elliptique.

2. Procédé selon la revendication 1, dans lequel la première opération est une opération de multiplication de points, une opération d'addition de points, une opération de doublement de points ou une combinaison d'une ou de plusieurs de ces opérations.

3. Procédé selon une quelconque revendication précédente, dans lequel le premier type est une courbe elliptique définie à l'aide de paramètres d'une équation de Montgomery ou d'une équation d'Edwards et dans lequel le second type est une courbe elliptique définie à l'aide de paramètres d'une équation de Weierstrass.

4. Procédé selon une quelconque revendication précédente, dans lequel l'obtention de la deuxième valeur comprend la transformation de la première valeur en la deuxième valeur.

5. Procédé selon la revendication 4, dans lequel la transformation de la première valeur en la deuxième valeur comprend la récupération d'une ou de plusieurs constantes définissant la seconde courbe elliptique.

6. Procédé selon la revendication 4 ou 5, comprenant en outre :
la détermination d'une première valeur supplémentaire à partir de la première valeur, la première valeur supplémentaire correspondant au premier point, et la transformation de la première valeur supplémentaire en une deuxième valeur supplémentaire correspondant au deuxième point, dans lequel la première opération est effectuée à l'aide de la deuxième valeur et de la deuxième valeur supplémentaire.

7. Procédé selon l'une quelconque des revendications 1 à 3, dans lequel l'obtention de la deuxième valeur comprend :

la détermination pour savoir si le premier point correspond à un point prédéfini ;
à la suite de la détermination que le premier point correspond au point prédéfini, la récupération de la deuxième valeur.

8. Procédé selon une quelconque revendication précédente, dans lequel la transformation de la troisième valeur en la quatrième valeur est effectuée, au moins en partie, sur un second module de processeur.

9. Système comprenant :
un premier module de processeur (13) qui prend en charge une première opération sur une courbe elliptique d'un second type, le système étant configuré pour :

pour une première valeur correspondant à un premier point sur une première courbe elliptique d'un premier type définie sur un corps fini, obtenir une deuxième valeur correspondant à un deuxième point sur une seconde courbe elliptique du second type définie sur le corps fini ;
effectuer, sur le premier module de processeur, une première opération à l'aide de la deuxième valeur pour déterminer une troisième valeur correspondant à un troisième point sur la seconde courbe elliptique ; et transformer la troisième valeur en une quatrième valeur correspondant à un quatrième point sur la première courbe elliptique, dans lequel le quatrième point sur la première courbe elliptique est équivalent à un point obtenu en effectuant la première opération sur le premier point sur la première courbe elliptique.

10. Système selon la revendication 9, dans lequel la transformation de la troisième valeur en la quatrième valeur est effectuée, au moins en partie, sur un second module de processeur.

11. Système selon la revendication 9 ou 10, dans lequel le second module de processeur est un module de processeur général dans un dispositif de module de sécurité matériel et dans lequel le premier module de processeur est un coprocesseur matériel dans le dispositif de module de sécurité matériel.

12. Système selon l'une quelconque des revendications 9 à 11, dans lequel le second module de processeur est un module de processeur général dans un premier dispositif informatique et le premier module de processeur se trouve dans un dispositif de carte à puce.

13. Système selon l'une quelconque des revendications 9 à 12, comprenant en outre :

une mémoire stockant une ou plusieurs constantes définissant la seconde courbe elliptique,
dans lequel la mémoire stocke en outre la deuxième valeur.

14. Support porteur comprenant un code lisible par ordinateur configuré pour amener un ordinateur à réaliser le procédé selon l'une quelconque des revendications 1 à 8.

Figure 1

11

RAM

17

Host interface

23

CPU

13

Crypto co-processor

15

Nonvolatile Storage

19

Figure 2

| S303 | Transform to Weierstrass |
|------|--------------------------|

| S305 | Point-multiplication on Weierstrass curve |
|------|-------------------------------------------|

| S307 | Inverse transform to Montgomery |
|------|---------------------------------|

Figure 3

S401 | Pre-computation

S403 | Transform to Weierstrass

S405 | Point-multiplication on Weierstrass curve

S407 | Inverse transform to Montgomery

Figure 4

Figure 5

S601 — Pre-computation

S602 — Obtain private key

S603 — Obtain point on Weierstrass curve

S604 — Point-multiplication on Weierstrass curve

S605 — Inverse transform to point on Montgomery curve

Figure 6

S501 — Generate y coordinate

S503 — Transform to Weierstrass

S505 — Point-multiplication on Weierstrass curve

S507 — Inverse transform to Montgomery

Figure 7

S701 | Transform to Montgomery

S702 | Transform to Weierstrass

S703 | Point-multiplication on Weierstrass curve

S704 | Inverse transform to Montgomery

S705 | Inverse transform to Edwards

Figure 8

S901 | Transform to Montgomery

S902 | Point-multiplication on Montgomery curve

S903 | Inverse transform to Edwards

Figure 9

Figure 10

12

RAM

17

Smart card

Interface

CPU

16

13

14

Nonvolatile
Storage

19

Figure 11(a)

Smartcard

Non-volatile storage
29

Connector
contacts

26

Processor

24

14

Figure 11(b)

S1201    Transform to Weierstrass

S1202    Point-multiplication on
         Weierstrass curve

S1203    Inverse transform to
         Montgomery

Figure 12

| | |
|---|---|
| S1301 | Transform to Montgomery |

↓

| | |
|---|---|
| S1302 | Transform to Weierstrass |

↓

| | |
|---|---|
| S1303 | Point-multiplication on Weierstrass curve |

↓

| | |
|---|---|
| S1304 | Inverse transform to Montgomery |

↓

| | |
|---|---|
| S1305 | Inverse transform to twisted Edwards |

Figure 13

Figure 14

S1501 — Transform to Montgomery

S1502 — Transform to Weierstrass

S1503 — Point-addition on Weierstrass curve

S1504 — Inverse transform to Montgomery

S1505 — Inverse transform to Edwards

Figure 15

S1701 (x, y)

S1704

S1705

S1702  x = 0  —Yes→  y = 1  —Yes→  Map to Ω

No

No

S1703  y=1  —Yes→  Raise 'invalid input' error

S1706

No

S1707  Use transforms to obtain (u, v)

Figure 16

S1801  (u, v)

S1802  (u, v)
= Ω

Yes → Map to (0,1)

S1803

No

No → Use transforms
to obtain (x, y)

S1806

S1804  v = 0

No →  u = -1

S1805

Yes

Yes → Raise 'invalid
input' error

S1807

Figure 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2085878 A1

- WO 2018145191 A1

**Non-patent literature cited in the description**

- Lecture Notes in Computer Science. **BERNSTEIN et al.** Progress in Cryptology - AFRICACRYPT 2008. Springer, 13 March 2008, 389-405